# EUROPEAN PATENT SPECIFICATION

(11) **EP 2 551 501 B1**
(45) Date of publication and mention of the grant of the patent: **08.03.2017**
(21) Application number: 10857269.4
(22) Date of filing: 16.09.2010
(51) Int. Cl.: F02D 41/40, F02D 41/38, F02M 45/04, F02M 57/00

(54) **FUEL INJECTION CONTROL DEVICE OF INTERNAL COMBUSTION ENGINE**
VORRICHTUNG ZUR KRAFTSTOFFINJEKTIONSSTEUERUNG FÜR VERBRENNUNGSMOTOREN
DISPOSITIF DE COMMANDE D'INJECTION DE CARBURANT DE MOTEUR À COMBUSTION INTERNE

(43) Date of publication of application: 30.01.2013
(73) Proprietor: TOYOTA JIDOSHA KABUSHIKI KAISHA, Toyota-shi, Aichi-ken, 471-8571 (JP)
(72) Inventor: MATSUNAGA, Akio, Toyota-shi Aichi-ken 471-8571 (JP)
(74) Representative: TBK
(86) International application number: PCT/JP2010/066069
(87) International publication number: WO 2012/035635

(56) References cited:
- WO-A1-2009/087715
- JP-A- 2004 044 417
- JP-A- 2004 044 417
- JP-A- 2007 132 334
- JP-A- 2007 239 605
- JP-A- 2009 024 596
- JP-A- 2009 167 821
- JP-A- 2009 293 596
- JP-A- 2009 299 490

## Description

### Technical Field

The present invention relates to a fuel injection control apparatus of an internal combustion engine typified by a diesel engine. In particular, the present invention relates to an improvement of an injection mode of auxiliary injection (hereinafter also referred to as pilot injection) to be executed prior to main injection (hereinafter also referred to as main injection).

### Background Art

Conventionally, as there has been known, in diesel engines used as an automobile engine and the like, fuel injection control of adjusting an amount and a timing of fuel injection from a fuel injection valve (hereinafter also referred to as an injector) is carried out in accordance with engine revolution, amount of accelerator operation, coolant temperature, intake air temperature, and the like. Then, in the fuel injection control, a fuel injection mode is controlled to improve exhaust emission, secure sufficient engine torque, reduce combustion noise, and the like. As one example, the injection mode of the pilot injection to be executed prior to the main injection is controlled.

For example, Patent Document 1 below discloses that the pilot injection is divided in plural times, and an injection amount of each divisional pilot injection is regulated to keep a penetration force of fuel low, to thereby prevent the fuel from attaching onto in-cylinder wall surface (hereinafter referred to as wall surface attachment of fuel). This reduces the amount of HC or CO to be generated in the exhaust due to the wall surface attachment of fuel and achieves the improvement in exhaust mission.

Patent Document 2 below discloses that a first fuel injection valve and a second fuel injection valve are provided for each cylinder, and the pilot fuel injection is executed by low fuel pressure from the first fuel injection valve, and the main fuel injection is executed by high fuel pressure from the second fuel injection valve. Accordingly, the pilot injection that achieves a fuel injection start time and a fuel injection period suitable for the engine operating state can be executed without being affected by the fuel pressure of the main fuel injection.

Further, Patent Document 3 discloses a configuration that can switch between a first injection pattern and a second injection pattern. In the first injection pattern, an aperture of discharge orifice of a fuel injection nozzle is variable, and the aperture of the discharge orifice is increased so as to increase the lift speed of a needle valve. Thus, an injection rate at the initial injection stage is set to be high. In the second pattern, the aperture of the discharge orifice is reduced so as to decrease the lift speed of the needle valve. Thus, the injection rate at the initial injection stage is set to be low. This configuration is applied to the pilot injection to achieve an improvement of ignitability in the pilot injection, the reduction of combustion noise, the reduction of emissions of NOx, and the like.

### Related Art Documents

### Patent Documents

Patent Document 1: JP 2009-167 821 A.
Patent Document 2: JP 2004-232 599 A.
Patent Document 3: JP 2002-089 392 A.
Patent Document 4: JP 2009-299 490 A

### Summary of the Invention

### Problems to be Solved by the Invention

In patent document 1, which discloses a control apparatus according to the preamble of claim 1, the wall surface attachment of fuel injected in the pilot injection can be prevented, but it is difficult to accurately adjust a position of the combustion field formed by the fuel (position of the combustion field in the combustion chamber). For this reason, when the combustion field is positioned on the outer circumferential side in the combustion chamber, a temperature of the combustion field might not adequately increase along with the leanness of the air-fuel ratio of the mixture, which leads to a lack of preheating amount. Thus, appropriate ignition time of the main injection (start time of diffusion combustion) might not be obtained.

The configuration in patent document 2 requires a plurality of fuel injection valves and a plurality of fuel supply structures for the respective valves. This results in the fuel supply system that is complex and expensive to manufacture. Thus, the configuration lacks practicality.

Further, in patent document 3, a mechanism to make the aperture of the discharge orifice variable is required. This also results in the fuel supply system that is complex and expensive to manufacture.

Finally, in patent document 4, another example of fuel injection control apparatus according to the preamble of claim 1 is given.

Thus, the conventional technologies require complex hardware to achieve appropriate adjustments of the injection pressure of the pilot injection.

Also, it has been believed that a configuration in which the pilot injection and the main injection are executed by a single fuel injection valve is difficult to achieve the optimization of the injection pressure of the pilot injection since the injection pressure of the pilot injection is specified by the injection pressure of the main injection. That is, it has been believed that the configuration is difficult to achieve the optimization of the injection pressure corresponding to requirements such as: setting the injection pressure of the pilot injection to prevent the wall surface attachment of fuel and sufficiently secure the preheating amount (setting the injection pressure of the pilot injection low with respect to the injection pressure of the main injection); and setting the injection pressure of the pilot injection to achieve the improvement in exhaust mission by increasing the premixed proportion of fuel injected in the pilot injection (setting the injection pressure of the pilot injection high with respect to the injection pressure of the main injection).

The present invention has been achieved in view of the above circumstances to solve the technical problems, and it is an object of the present invention to provide a fuel injection control apparatus of an internal combustion engine that can set fuel pressure of auxiliary injection (pilot injection) as desired without incurring complication of a fuel supply system.

### Means of Solving the Problems

### -Principle of Solution to the Problems-

The principle of solution of the present invention to achieve the above object is such that, when auxiliary injection (pilot injection) is executed for a plurality of times, the injection timing of subsequent auxiliary injection is determined based on the varying fuel pressure, by utilization of variation (fuel pressure pulsation) of fuel pressure in a fuel supply system, which is generated due to the preceding auxiliary injection to be executed. Thus, the fuel pressure of the subsequent auxiliary injection can be set as desired, and the position of a spray of the subsequent auxiliary injection can be set to a desired position. That is, when the preheating requirement of the auxiliary injection is high, the auxiliary injection is executed at a timing when the fuel pressure is low, so as to shorten a spray penetration distance. When the premixed proportion of the fuel injected in the auxiliary injection, the auxiliary injection is executed at a timing when the fuel pressure is high, so as to extend the spray penetration distance.

### -Solution Means-

Specifically, the present invention presupposes that a fuel injection control apparatus of a compression self-igniting internal combustion engine configured be capable of carrying out at least main injection and auxiliary injection executed for a plurality of times prior to the main injection, as a fuel injection operation from a fuel injection valve provided in a fuel supply system. The fuel injection control apparatus of the internal combustion engine includes a fuel pressure variation recognizing means, a target injection pressure setting means, and a subsequent auxiliary injection executing means. The fuel pressure variation recognizing means is configured to recognize fuel pressure in the fuel supply system that periodically changes with completion of preceding auxiliary injection in the auxiliary injection executed for a plurality of times. The target injection pressure setting means is configured to set target injection pressure of subsequent auxiliary injection to be executed after the completion of the preceding auxiliary injection, in accordance with the operations required for the auxiliary injection, an operation being the premix-required case, in which the target injection pressure of the subsequent auxiliary injection is set higher than the main setting pressure, to increase the premixed proportion of the fuel injected in the subsequent auxiliary injection, and another operation being the preheating-required case, in which the target injection pressure of the subsequent auxiliary injection is set lower than the main setting pressure, to secure the in-cylinder preheating by the fuel injected in the subsequent auxiliary injection. The subsequent auxiliary injection executing means is configured to execute the subsequent auxiliary injection at a time when the fuel pressure in the fuel supply system that is recognized by the fuel pressure variation recognizing means reaches the target injection pressure set by the target injection pressure setting means.

With these particular matters, the fuel pressure pulsation is generated such that the fuel pressure in the fuel supply system periodically changes with the completion of the preceding auxiliary injection (repeat ascent and descent). That is, a state where the fuel pressure is high with respect to the fuel injection pressure in the main injection and a state where the fuel pressure is low with respect to the fuel injection pressure are repeated. Then, target injection pressure of the subsequent auxiliary injection is set in advance in accordance with the operations required for the auxiliary injection, an operation being the premix-required case, in which the target injection pressure of the subsequent auxiliary injection is set higher than the main setting pressure, to increase the premixed proportion of the fuel injected in the subsequent auxiliary injection, and another operation being the preheating-required case, in which the target injection pressure of the subsequent auxiliary injection is set lower than the main setting pressure, to secure the in-cylinder preheating by the fuel injected in the subsequent auxiliary injection, and the subsequent auxiliary injection is executed at a time when the fuel pressure in the fuel supply system reaches the target injection pressure. That is, when the target injection pressure of the subsequent auxiliary injection is set as a low value with respect to the fuel injection pressure in the main injection, the subsequent auxiliary injection is executed at a timing when the fuel pressure in the fuel supply system becomes low due to the pulsation (timing when the fuel pressure corresponds with the target injection pressure). In contrast, when the target injection pressure of the subsequent auxiliary injection is set as a high value with respect to the fuel injection pressure in the main injection, the subsequent auxiliary injection is executed at a timing when the fuel pressure in the fuel supply system becomes high due to the pulsation (timing when the fuel pressure corresponds with the target injection pressure). Thus, by utilization of the fuel pressure pulsation in the fuel supply system, the subsequent auxiliary injection can be executed under desired fuel injection pressure, and the spray penetration distance of fuel injected in the subsequent auxiliary injection can arbitrarily be adjusted.

The target injection pressure of the subsequent auxiliary injection may be set based on a target value of a spray penetration distance of the fuel injected in the subsequent auxiliary injection in a combustion chamber.

With this particular matter, the injection pressure of the subsequent auxiliary injection is set lower than the injection pressure of the main injection and the injection pressure of the preceding auxiliary injection, so that the spray penetration distance in the combustion chamber can be shortened without reducing the injection amount of the subsequent auxiliary injection. Accordingly, this achieves the richness of the air-fuel ratio of the mixture in the combustion field formed by the fuel injected in the subsequent auxiliary injection and adequately enhances the temperature of the combustion field so as to sufficiently obtain preheating amount.

More specifically, a subsequent auxiliary injection executing means is configured to execute the subsequent auxiliary injection, after the completion of the preceding auxiliary injection, at a time when the fuel pressure reaches the target injection pressure in a first fuel supply system internal pressure descent period.

This allows the execution timing of the subsequent auxiliary injection to be set on the advance angle side as much as possible, whereby achieving the improvement of the fuel consumption ratio in cooperation with the operation and effect described above.

More specifically, a subsequent auxiliary injection executing means is configured to execute the subsequent auxiliary injection, after the completion of the preceding auxiliary injection, at a time when the fuel pressure reaches the target injection pressure in a first fuel supply system internal pressure ascent period.

Similarly, in the case of this configuration, the execution timing of the subsequent auxiliary injection can be set on the advance angle side as much as possible, whereby improving the fuel consumption ratio along with the operation and effect described above.

Also, a means to achieve the appropriate adjustment of the injection amount of the preceding auxiliary injection includes the following configuration. First, when the target injection pressure of the subsequent auxiliary injection is set in accordance with an in-cylinder preheating required degree of fuel injected in the subsequent auxiliary injection, a preceding auxiliary injection amount determining means is configured to determine an injection amount of the preceding auxiliary injection in a manner that a minimum value of the fuel pressure in the fuel supply system that periodically changes with the completion of the preceding auxiliary injection becomes equal to or lower than the target injection pressure set by the target injection pressure setting means.

Also, when the target injection pressure of the subsequent auxiliary injection is set in accordance with the premixed proportion of the fuel injected in the subsequent auxiliary injection, a preceding auxiliary injection amount determining means is configured to determine an injection amount of the preceding auxiliary injection in a manner that a maximum value of the fuel pressure in the fuel supply system that periodically changes with the completion of the preceding auxiliary injection becomes equal to or higher than the target injection pressure set by the target injection pressure setting means.

These configurations allow the fuel pressure in the fuel supply system during the generation of the fuel pressure pulsation to surely reach the target injection pressure of the subsequent auxiliary injection and make it possible to surely obtain the effects of adjustment of the execution timing of the subsequent auxiliary injection described above.

### Effects of the Invention

In the present invention, the injection timing of subsequent auxiliary injection is determined based on the varying fuel pressure, by utilization of variation of fuel pressure in a fuel supply system that is generated due to the preceding auxiliary injection to be executed, and the fuel pressure of the subsequent auxiliary injection can be set as desired, regardless of the injection pressure of the main injection. Accordingly, the spray penetration distance of fuel injected in the subsequent auxiliary injection can be adjusted as desired.

### Brief Description of the Drawings

[FIG. 1] FIG. 1 is a schematic configuration view of an engine and a control system for the same according to the present embodiment.
[FIG. 2] FIG. 2 is a cross-sectional view of a combustion chamber of a diesel engine and its peripherals.
[FIG. 3] FIG. 3 is a block diagram illustrating a configuration of a control system such as an ECU.
[FIG. 4] FIG. 4 is a schematic view of an intake-exhaust system and the combustion chamber illustrating an outline of a combustion mode in the combustion chamber.
[FIG. 5] FIG. 5 is a cross-sectional view of the combustion chamber and its peripherals at a time of fuel injection.
[FIG. 6] FIG. 6 is a plan view of the combustion chamber at the time of fuel injection.
[FIG. 7] FIG. 7 is a diagram illustrating each injection pattern of pilot injection and main injection in a case where divisional pilot injection is executed twice, as well as corresponding variation in temperatures of mixture.
[FIG. 8] FIG. 8 is a flowchart illustrating a control procedure in a first embodiment of preheating-required case control.
[FIG. 9] FIG. 9 is a spray penetration distance map illustrating a relation between injection pressure and a fuel penetration distance.
[FIG. 10] FIG. 10 is a diagram illustrating a relation between fuel pressure pulsation generated with execution of first pilot injection and an execution timing of second pilot injection in the first embodiment of preheating-required case control.
[FIG. 11] FIG. 11 is a flowchart illustrating a control procedure in a second embodiment of preheating-required case control.
[FIG. 12] FIG. 12 is a diagram illustrating a first pilot injection amount setting map used for the preheating-required case control.
[FIG. 13] FIG. 13 is a diagram illustrating a relation between the fuel pressure pulsation generated with execution of the first pilot injection and the execution timing of the second pilot injection in the second embodiment of preheating-required case control.
[FIG. 14] FIG. 14 is a flowchart illustrating a control procedure of a first embodiment of premix-required case control.
[FIG. 15] FIG. 15 is a diagram illustrating a relation between fuel pressure pulsation generated with execution of the first pilot injection and an execution timing of the second pilot injection in the first embodiment of premix-required case control.
[FIG. 16] FIG. 16 is a flowchart illustrating a control procedure in a second embodiment of premix-required case control.
[FIG. 17] FIG. 17 is a diagram illustrating the first pilot injection amount setting map used for the premix-required case control.
[FIG. 18] FIG. 18 is a diagram illustrating a relation between the fuel pressure pulsation generated with execution of the first pilot injection and the execution timing of the second pilot injection in the second embodiment of premix-required case control.

### Modes for Carrying out the Invention

Hereinafter, embodiments of the present invention will be described below referring to the drawings. In the embodiment, description will be given with regard to a case where the present invention is applied to a common rail in-cylinder direct injection multi-cylinder (for example, inline four-cylinder) diesel engine (compression self-igniting internal combustion engine) mounted in an automobile.

### -Engine Configuration-

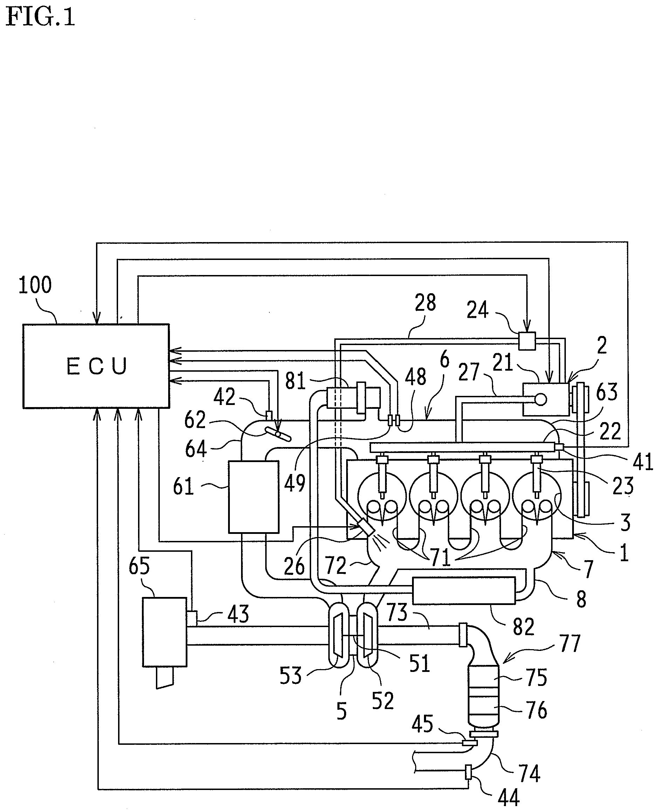

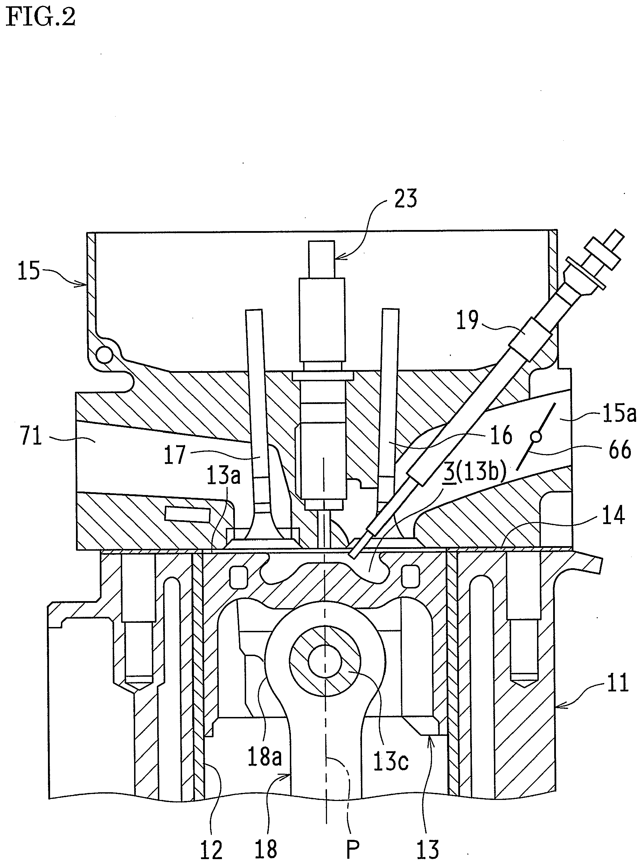

First, one example of a diesel engine (hereinafter referred to simply as an engine) to which the embodiment are applied will be described. FIG. 1 is a schematic configuration view of an engine 1 and a control system for the same according to the embodiment. Also, FIG. 2 is a cross-sectional view of a combustion chamber 3 of the diesel engine and its peripherals.

As shown in FIG. 1, the engine 1 according to the embodiment is configured as a diesel engine system including, as main units, a fuel supply system 2, the combustion chambers 3, an intake system 6, an exhaust system 7, and the like.

The fuel supply system 2 includes a supply pump 21, a common rail 22, injectors (fuel injection valves) 23, a cutoff valve 24, a fuel addition valve 26, an engine fuel path 27, an added fuel path 28, and the like.

The supply pump 21 draws fuel from a fuel tank, and after putting this drawn fuel under high pressure, supplies that fuel to the common rail 22 via the engine fuel path 27. The common rail 22 has a function as an accumulation chamber where high pressure fuel supplied from the supply pump 21 is held (accumulated) at a predetermined pressure, and distributes this accumulated fuel to each injector 23. The injectors 23 are configured as piezo injectors within which a piezoelectric element (piezo element) is disposed and that supply fuel by injection into the combustion chambers 3 by appropriately opening a valve. The details of control of fuel injection from the injectors 23 will be described later.

Also, the supply pump 21 supplies part of the fuel drawn from the fuel tank to the fuel addition valve 26 via the added fuel path 28. In the added fuel path 28, the above-described cutoff valve 24 is disposed in order to stop fuel addition by cutting off the added fuel path 28 during an emergency.

Also, the fuel addition valve 26 is configured as an electronically controlled opening/closing valve whose valve opening time is controlled with an addition control operation by an ECU 100, described later, such that the amount of fuel added to the exhaust system 7 is a target addition amount (an addition amount such that the exhaust A/F equals the target A/F), and such that a fuel addition timing is a predetermined timing. That is, a desired amount of fuel from the fuel addition valve 26 is supplied by injection to the exhaust system 7 (to an exhaust manifold 72 from an exhaust ports 71) at an appropriate timing.

The intake system 6 includes an intake manifold 63 connected to an intake port 15a formed in a cylinder head 15 (see FIG. 2), and an intake tube 64 constituting an intake path is connected to this intake manifold 63. Also, in this intake path, an air cleaner 65, an airflow meter 43, and a throttle valve (an intake throttle valve) 62 are disposed in this order from the upstream side. The airflow meter 43 outputs an electrical signal corresponding to the amount of air that flows into the intake path via the air cleaner 65.

Also, the intake system 6 includes a swirl control valve (swirl velocity variable mechanism) 66 to change a swirl flow (swirl flow in the horizontal direction) in the combustion chamber 3 (see FIG. 2). Specifically, each cylinder includes two systems, which provide a normal port and a swirl port, as the intake port 15a. In the normal port 15a shown in FIG. 2, a swirl control valve 66 made up of a butterfly valve whose opening degree is adjustable is disposed. An actuator, not shown, is linked with the swirl control valve 66. It is configured such that the amount of air flow that flows through the normal port 15a can be changed in accordance with the opening degree of the swirl control valve 66, which is drivingly adjusted by the actuator. The higher opening degree of the swirl control valve 66 leads to the larger amount of air drawn from the normal port 15a into the cylinder. Accordingly, a swirl generated in the swirl port (not shown in FIG. 2) is relatively weaken, which leads to a low swirl (a state where a swirl velocity is low). Conversely, the lower opening degree of the swirl control valve 66 leads to the smaller amount of air drawn from the normal port 15a into the cylinder. Consequently, the swirl generated in the swirl port is relatively enhanced, which leads to a high swirl (a state where the swirl velocity is high) in the cylinder.

The exhaust system 7 includes the exhaust manifold 72 connected to the exhaust ports 71 formed in the cylinder head 15, and exhaust tubes 73 and 74 constituting an exhaust path are connected to this exhaust manifold 72. Also, in this exhaust path, a maniverter (exhaust purification apparatus) 77 is disposed that includes an NOx storage catalyst (NSR catalyst: NOx Storage Reduction catalyst) 75 and a DPNR catalyst (Diesel Particulate-NOx Reduction catalyst) 76. These NSR catalyst 75 and DPNR catalyst 76 will be described below.

The NSR catalyst 75 is a storage reduction NOx catalyst and includes, for example, alumina (Al₂O₃) as a support that supports thereon, for example, an alkali metal such as potassium (K), sodium (Na), lithium (Li), and cesium (Cs); an alkaline earth element such as barium (Ba) and calcium (Ca); a rare earth element such as lanthanum (La) and Yttrium (Y); and a precious metal such as platinum (Pt).

The NSR catalyst 75 stores NOx in a state in which a large amount of oxygen is present in the exhaust, while reducing NOx to NO₂ or NO to release NOx in a state in which the oxygen concentration in the exhaust is low and a large amount of a reduction component (for example, an unburned component (HC) of fuel) is present. NOx released as NO₂ or NO is further reduced to N₂ due to quick reaction with HC or CO in the exhaust. Also, by reducing NO₂ or NO, HC and CO themselves are oxidized and thus become H₂O or CO₂. That is, by appropriately adjusting the oxygen concentration or the HC component in the exhaust introduced to the NSR catalyst 75, HC, CO, and NOx in the exhaust can be purified. In the configuration of the present embodiment, the oxygen concentration and the HC component in the exhaust can be adjusted with the operation of adding fuel from the fuel addition valve 26.

Meanwhile, the DPNR catalyst 76 includes, for example, a porous ceramic structure that supports an NOx storage reduction catalyst, so that PM in exhaust gas is captured when passing through a porous wall. When the air-fuel ratio of the exhaust gas is lean, NOx in the exhaust gas is stored in the NOx storage reduction catalyst, while when the air-fuel ratio is rich, the stored NOx is reduced and released. Furthermore, the DPNR catalyst 76 supports a catalyst that oxidizes/burns the captured PM (for example, an oxidization catalyst whose main component is a precious metal such as platinum).

Now, the configuration of the combustion chamber 3 of the diesel engine and peripheral parts of the combustion chamber 3 will be described with reference to FIG. 2. As shown in FIG. 2, in a cylinder block 11 constituting part of the main body of the engine, a cylindrical cylinder bore 12 is formed in each the cylinders (four cylinders), and each cylinder bore 12 vertically slidably accommodates a piston 13.

The combustion chamber 3 is formed on the top side of a top face 13a of the piston 13. That is, the combustion chamber 3 is defined by a lower face of the cylinder head 15 installed on top of the cylinder block 11 via a gasket 14, an inner wall face of the cylinder bore 12, and the top face 13a of the piston 13. In approximately the center of the top face 13a of the piston 13, a cavity (a recessed unit) 13b is disposed in the form of a depression, and the cavity 13b also constitutes part of the combustion chamber 3.

The shape of the cavity 13b is such that the size of depression at the center portion (on a cylinder center line P) is small and gradually increases toward the outer peripheral side. That is, as shown in FIG. 2, when the piston 13 is adjacent to its compression top dead center, the combustion chamber 3 defined by the cavity 13b has a small portion of space of relatively small capacity at the center portion, and a gradually expanded portion of space (which is assumed an expanded space) toward the outer peripheral side.

A small end 18a of a connecting rod 18 is linked to the piston 13 via a piston pin 13c, while a large end of the connecting rod 18 is linked to a crankshaft serving as an engine output shaft. This ensures that the reciprocating movement of the piston 13 within the cylinder bore 12 is transmitted to the crankshaft via the connecting rod 18, which causes the crankshaft to rotate to obtain engine output. Also, a glow plug 19 is disposed facing the combustion chamber 3. The glow plug 19 functions as a starting assistance apparatus that glows by receiving a flow of electrical current immediately before the engine 1 is started, and that receives a blow of part of a fuel spray, thus promoting ignition and combustion.

The cylinder head 15 includes the intake port 15a formed to introduce air to the combustion chamber 3, the exhaust port 71 formed to discharge exhaust gas from the combustion chamber 3, an intake valve 16 disposed to open/close the intake port 15a, and an exhaust valve 17 disposed to open/close the exhaust port 71. The intake valve 16 and the exhaust valve 17 are disposed to face one another across the cylinder center line P. That is, the engine 1 of this example is configured as a cross flow-type engine. Also, the injector 23, which injects fuel directly into the combustion chamber 3, is mounted in the cylinder head 15. The injector 23 is disposed in approximately the center above the combustion chamber 3 in upright orientation along the cylinder center line P, and injects fuel introduced from the common rail 22 toward the combustion chamber 3 at a predetermined timing.

Furthermore, as shown in FIG. 1, a supercharger (turbocharger) 5 is disposed in the engine 1. The turbocharger 5 includes a turbine wheel 52 and a compressor impeller 53 that are linked to one another via a turbine shaft 51. The compressor impeller 53 is disposed facing the inside of the intake tube 64, while the turbine wheel 52 is disposed facing the inside of the exhaust tube 73. This ensures that the turbocharger 5 utilizes exhaust flow (exhaust pressure) received by the turbine wheel 52 to rotate the compressor impeller 53, so as to implement what is called a turbocharging operation such as increasing the intake pressure. The turbocharger 5 of the present embodiment is a variable nozzle-type turbocharger, in which a variable nozzle vane mechanism (not shown) is provided on the turbine wheel 52 side. Adjusting the opening degree of the variable nozzle vane mechanism ensures adjustment of the turbocharging pressure of the engine 1.

The intake tube 64 of the intake system 6 includes an intercooler 61 that forcibly cools intake air heated by supercharging with the turbocharger 5.

The throttle valve 62 is disposed further downstream than the intercooler 61.
The throttle valve 62 is an electronically controlled opening/closing valve whose opening degree is capable of stepless adjustment, and has a function to constrict the area of the path of intake air under predetermined conditions, and thus to adjust (reduce) the supplied amount of intake air.

Also, the engine 1 includes an exhaust gas recirculation path (EGR path) 8 that connects the intake system 6 and the exhaust system 7. The EGR path 8 appropriately recirculates part of the exhaust to the intake system 6 and resupplies the part of the exhaust to the combustion chamber 3, so as to decrease the combustion temperature. Thus, the amount of produced NOx is reduced. Also, the EGR path 8 includes an EGR valve 81 that is opened/closed steplessly under electronic control and is capable of adjusting the amount of exhaust flow that flows through the EGR path 8 as desired, and an EGR cooler 82 that cools exhaust passing through (recirculates through) the EGR path 8. The EGR path 8, the EGR valve 81, the EGR cooler 82, and the like constitute an EGR apparatus (exhaust gas recirculation apparatus).

### -Sensors-

Various sensors are mounted on the parts of the engine 1 to output signals related to environmental conditions at each part and the operating state of the engine 1.

For example, the airflow meter 43 outputs a detection signal according to an intake air flow amount (intake air amount) on the upstream of the throttle valve 62 within the intake system 6. An intake temperature sensor 49 is disposed in the intake manifold 63 and outputs a detection signal according to the temperature of intake air. An intake pressure sensor 48 is disposed in the intake manifold 63 and outputs a detection signal according to the intake air pressure. An A/F (air-fuel ratio) sensor 44 outputs a detection signal that continuously changes according to the oxygen concentration in exhaust on the downstream of the maniverter 77 of the exhaust system 7. An exhaust temperature sensor 45 outputs a detection signal according to the temperature of exhaust gas (exhaust temperature) likewise on the downstream of the maniverter 77 of the exhaust system 7. A rail pressure sensor 41 outputs a detection signal according to the pressure of fuel accumulated in the common rail 22. A throttle opening degree sensor 42 detects the opening degree of the throttle valve 62.

### -ECU-

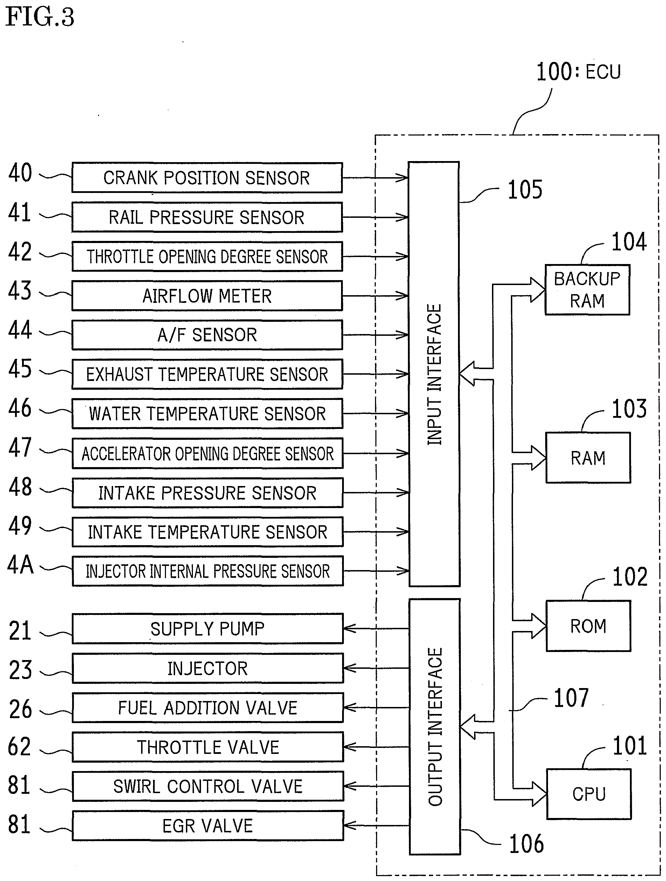

As shown in FIG. 3, the ECU 100 includes a CPU 101, a ROM 102, a RAM 103, and a backup RAM 104. The ROM 102 stores various control programs, maps that are referred to when executing those various control programs, and the like. The CPU 101 executes various arithmetic processes based on the various control programs and maps stored in the ROM 102. The RAM 103 is a memory that temporarily stores results of arithmetic operations with the CPU 101 or data input from the sensors, and the like. The backup RAM 104, for example, is a nonvolatile memory that stores data that needs storing or the like when the engine 1 is stopped.

The CPU 101, the ROM 102, the RAM 103, and the backup RAM 104 above are connected to each other via a bus 107, and are connected to an input interface 105 and an output interface 106.

The rail pressure sensor 41, the throttle opening degree sensor 42, the airflow meter 43, the A/F sensor 44, the exhaust temperature sensor 45, the intake pressure sensor 48, and the intake temperature sensor 49 are connected to the input interface 105. Further connected to the input interface 105 are a water temperature sensor 46 that outputs a detection signal according to the coolant temperature of the engine 1, an accelerator opening degree sensor 47 that outputs a detection signal according to the amount of pressing of an accelerator pedal, a crank position sensor 40 that outputs a detection signal (pulse) at each rotation of an output shaft (crankshaft) of the engine 1 by a predetermined angle, an injector internal pressure sensor 4A to detect fuel pressure in the injector 23, and the like.

Meanwhile, the supply pump 21,the injector 23, the fuel addition valve 26, the throttle valve 62, the swirl control valve 66, the EGR valve 81, and the like are connected to the output interface 106. Also, in addition, an actuator (not shown) provided for the variable nozzle vane mechanism of the turbocharger 5 is connected to the output interface 106.

Then, the ECU 100 executes various kinds of control of the engine 1 based on the output of the various sensors described above, mathematical values obtained by a mathematical formula in which the values of the output are used, and the various maps stored in the ROM 102.

For example, the ECU 100 controls the opening degree of the EGR valve 81 in accordance with the operating state of the engine 1 and adjusts an exhaust gas recirculation amount (EGR amount) to the intake manifold 63. The EGR amount is set in accordance with an EGR map stored in advance in the ROM 102. Specifically, the EGR map is a map to determine the EGR amount (EGR ratio) according to parameters such as engine revolution and engine load. It is to be noted that the EGR map is produced in advance based on experiment, simulation, or the like. That is, EGR amount (opening degree of the EGR valve 81) is obtained by applying, to the EGR map, the engine revolution calculated based on the detection value of the crank position sensor 40 and the opening degree (corresponding to engine load) of the throttle valve 62 detected by the throttle opening degree sensor 42.

Further, the ECU 100 controls the opening degree of the swirl control valve 66. The control of the opening degree of the swirl control valve 66 is carried out in such a manner as to change a displacement amount of a spray of fuel injected in the combustion chamber 3 per unit time (or per unit crank rotation angle) in the circumferential direction in the cylinder.

Also, the ECU 100 executes pilot injection, pre-injection, main injection (main injection), after-injection (auxiliary injection), post-injection, and the like as fuel injection control of the injectors 23.

### -Fuel Injection Mode-

Hereinafter, the outline of each of operations of the pilot injection, the pre-injection, the main injection, the after-injection, and the post-injection according to the present embodiment is described.

### (Pilot Injection)

The pilot injection is an operation of pre-injecting a small amount of fuel as needed prior to the main injection from the injector 23. Specifically, when a diffusion combustion start time of fuel injected in the main injection is estimated to be on the delay angle side with respect to a target time (hereinafter referred to as "target diffusion combustion start time"), a temperature of mixture (in-cylinder temperature) is raised before reaching the target diffusion combustion start time, and the pilot injection is executed to make the diffusion combustion start time of fuel injected in the main injection match with the target diffusion combustion start time (for example, in terms of a crank angle, 5 degrees after compression top dead center of the piston 13 (ATDC 5°)). That is, after execution of the pilot injection, fuel injection is temporarily stopped, and the temperature of mixture (temperature in the cylinder) is adequately increased so as to reach a temperature (for example, 1000K) allowing diffusion combustion of fuel at the target diffusion combustion start time (for example, 1000K) before the main injection is started. This ensures the appropriate adjustment of combustion state of fuel injected in the main injection and thus attempts to improve exhaust mission, secure sufficient engine torque, reduce combustion noise, and the like are facilitated.

Also, the utilization forms of the pilot injection include: a utilization form in which a spray penetration distance (penetration distance of a spray) of fuel injected is set to a relatively short distance so as to make the air-fuel.ratio rich in the combustion field, to thereby secure the preheating amount described above (utilization form in which the proportion of the preheating in the total amount of the pilot injection is increased); and a utilization form in which the spray penetration distance (penetration distance of a spray) of fuel injected is set to a relatively long distance (set long in a range within which the fuel is not attached to wall surfaces) so as to make the air-fuel ratio lean in the combustion field to thereby increase the premixed proportion, in an aim to facilitate the attempt to regulate the amount of smoke generated (utilization form in which the premixed proportion in the total amount of the pilot injection is increased).

In the present embodiment, the total pilot injection amount that is a fuel injection amount required in the pilot injection is divided into the pilot injection executed for a plurality of times (hereinafter referred to as "divisional pilot injection") so as to intermittently carry out fuel injection from the injectors 23. A specific setting method of the fuel injection timing, the fuel injection amount, and the like for each divisional pilot injection will be described later.

### (Pre-Injection)

The pre-injection is an injection operation of pre-injecting a small amount of fuel prior to the main injection from the injector 23 as needed. According to the pre-injection, an ignition delay of fuel in the main injection is suppressed so as to provide stable diffusion combustion.

### (Main Injection)

The main injection is an injection operation for generating torque of the engine 1 (torque-generating fuel supply operation). The amount of injection in the main injection is basically determined in such a manner that a required torque is obtained according to the operating state, such as engine revolution, amount of accelerator operation, coolant temperature, and intake air temperature. For example, a higher torque required value of the engine 1 is obtained with the higher engine revolution (engine revolution calculated based on an output signal of the crank position sensor 40), and the higher accelerator operation amount (amount of depression of an accelerator pedal detected by the accelerator opening degree sensor 47) (as the accelerator opening degree increases). In response to this, a larger fuel injection amount is set in the main injection. Also, with regard to the fuel injected in the main injection, the diffusion combustion starts at the target diffusion combustion start time when the temperature of mixture (in-cylinder temperature) is sufficiently increased with the fuel injected in the pilot injection described above.

### (After-injection)

The after-injection is an injection operation for increasing the exhaust gas temperature. Specifically, in this embodiment, the after-injection is executed at such a timing that the combustion energy of fuel supplied by the after-injection is not converted to the torque of the engine, but rather, the great majority of the combustion energy is obtained as exhaust heat energy.

### (Post-injection)

The post-injection is an injection operation for achieving an increase in a temperature of the maniverter 77 by directly introducing fuel to the exhaust system 7. For example, the post injection is executed when the deposited amount of PM captured by the DPNR catalyst 76 exceeds a predetermined amount (which is detected by, for example, detecting a difference in pressure between the front and rear of the maniverter 77).

### -Fuel Injection Pressure-

The injection pressure of fuel injected in the main injection is determined by internal pressure of the common rail 22. The internal pressure of the common rail is generally such that the target value of the fuel pressure supplied from the common rail 22 to the injector 23, that is, target rail pressure (target value of injection pressure of fuel injected in the main injection), is set as a higher value as the engine load (engine load) increases, and as the engine revolution (engine revolution) increases. That is, when the engine load is high, a large amount of air is drawn into the combustion chamber 3, so that it is necessary to inject a large amount of fuel into the combustion chamber 3 from the injector 23. This necessitates high injection pressure from the injector 23. When the engine revolution is high, the period during which injection is executable is short, so that it is necessary to increase the amount of fuel per unit time to be injected. This necessitates high injection pressure from the injector 23. Thus, the target rail pressure is generally set based on the engine load and the engine revolution. It is to be noted that the target rail pressure is, for example, set in accordance with a fuel pressure setting map stored in the ROM 102. That is, the fuel pressure is determined in accordance with the fuel pressure setting map, and a valve opening period (injection rate waveform) of the injector 23 is controlled, which makes it possible to specify the fuel injection amount in the valve opening period. It is to be noted that, in the present embodiment, the fuel pressure is adjusted between 30MPa and 200MPa in accordance with the engine load and the like.

Fuel injection parameters for the main injection have optimum values that vary according to the temperature conditions of the engine, intake air, and the like.

For example, the ECU 100 adjusts the amount of fuel discharged by the supply pump 21 such that the common rail pressure equals the target rail pressure set based on the operating state of the engine, that is, such that the fuel injection pressure matches the target injection pressure. Also, the ECU 100 determines the fuel injection amount and the form of fuel injection based on the operating state of the engine. Specifically, the ECU 100 calculates an engine revolution speed based on the detection value of the crank position sensor 40 and obtains an amount of pressing of accelerator pedal (accelerator opening degree) based on the detection value of the accelerator opening degree sensor 47, and determines the fuel injection timing and the fuel injection amount in the main injection and the like based on the engine revolution speed and the accelerator opening degree.

### -Schematic Description of Combustion Form-

Next, the outline of combustion mode in the combustion chamber 3 of the engine 1 according to this embodiment will be described.

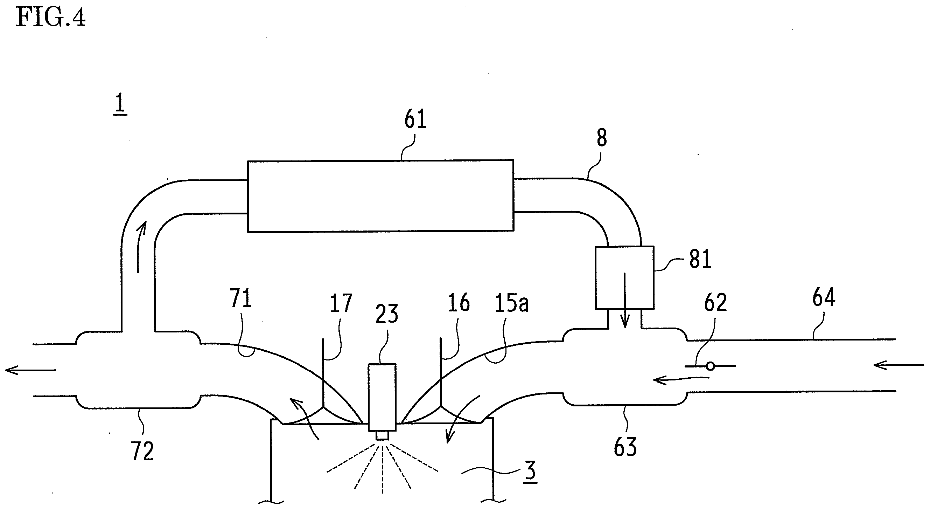

FIG. 4 is a diagram schematically showing a situation where, with respect to one cylinder of the engine 1, gas (air) is drawn into the cylinder via the intake manifold 63 and the intake port 15a, combustion is executed by fuel injection from the injector 23 into the combustion chamber 3, and the gas after the combustion is discharged into the exhaust manifold 72 via the exhaust port 71.

As shown in FIG. 4, gas drawn into the cylinder includes fresh air that is drawn in from the intake tube 64 via the throttle valve 62, and EGR gas that is drawn in from the EGR path 8 when the EGR valve 81 is opened. The ratio (that is, EGR ratio) of the EGR gas amount to the sum of drawn fresh air amount (mass) and drawn EGR gas amount (mass) changes in accordance with the opening degree of the EGR valve 81, which is appropriately controlled by the ECU 100 according to the operating state.

The fresh air and the EGR gas drawn in the cylinder in this manner are drawn into the cylinder via the intake valve 16 that opens during the intake process in accordance with the downward movement of the piston 13 (not shown in FIG. 4), and thus turns into in-cylinder gas. The in-cylinder gas is encapsulated (a trapped state of the in-cylinder gas) in the cylinder by closing the intake valve 16 at a valve-closing time determined according to the operating state of the engine 1, and compressed as the piston 13 moves upward in the subsequent compression process. Then, when the piston 13 reaches to the vicinity of its top dead center, a valve of the injector 23 is opened only for a predetermined period of time according to the injection amount control by the ECU 100 described above, so as to directly inject fuel into the combustion chamber 3. Specifically, the pilot injection or the like is executed before the piston 13 reaches its top dead center, and after fuel injection is temporarily stopped and after a predetermined interval, the main injection is executed at the timing at which the piston 13 reaches the vicinity of the top dead center. Also, after the main injection is executed, the after-injection or the post-injection is carried out after as needed after a predetermined interval.

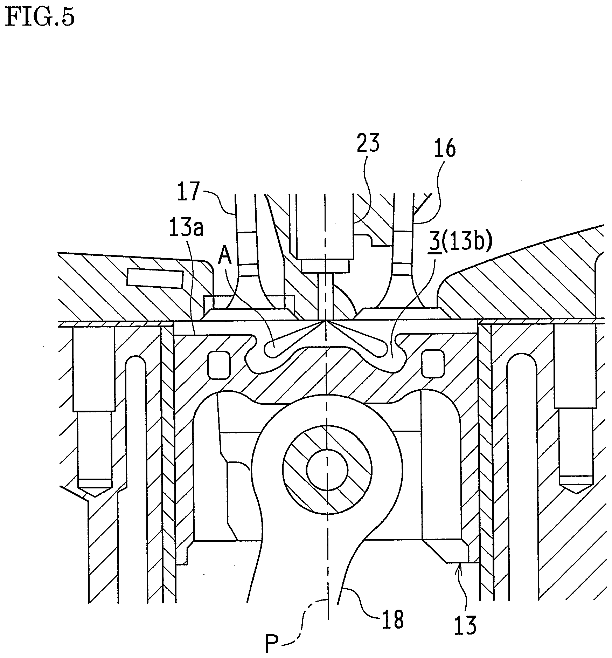

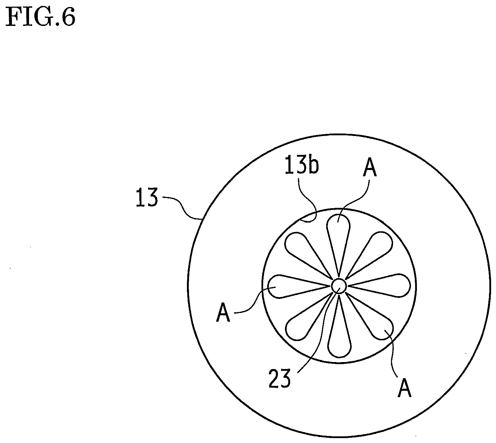

FIG. 5 is a cross-sectional view of the combustion chamber 3 and its peripherals at the time of fuel injection (main injection). FIG. 6 is a plan view of the combustion chamber 3 at the time of the fuel injection (diagram illustrating an upper surface of the piston 13). As shown in FIG. 6, eight injection holes are provided for the injector 23 of the engine 1 according to the present embodiment across the circumferential direction at regular intervals, and fuel is evenly injected from each of the injection holes. It is to be noted that the number of injection holes is not limited to eight.

Then, sprays A, A, ... of fuel injected from injection holes are each diffused in an approximately conical shape. Also, fuel injection from each injection hole (in particular, main injection) is carried out when the piston 13 reaches the vicinity of compression top dead center, Thus, as shown in FIG. 5, the sprays A, A, ... of fuel are each diffused in the cavity 13b.

Thus, the sprays A, A, ... of fuel injected from the injection holes formed in the injector 23 are each mixed with in-cylinder gas as a time a lapses into the mixture and diffused in a conical shape in each cylinder and combusted by self-ignition. That is, the sprays A, A, ... A of fuel each form the combustion field having an approximately conical shape together with the in-cylinder gas, and the combustion starts in their respective combustion fields (8 portions of combustion fields in the present embodiment).

The great majority of energy generated by the combustion of fuel injected in the main injection is mainly obtained as kinetic energy to push down the piston 13 toward its bottom dead center (energy that serves as engine output).

The in-cylinder gas after combustion is discharged into the exhaust ports 71 and the exhaust manifold 72 via the exhaust valve 17 that opens a valve in the combustion stroke and along the upward movement of the piston 13 to be the exhaust gas.

### -Control Operation for Pilot Injection-

Next, a control operation to execute the pilot injection, which is a feature of the present embodiment, will be specifically described.

As is described above, in the pilot injection according to the present embodiment, the total pilot injection amount that is the fuel injection amount required in the pilot injection is secured by divisional pilot injection executed for a plurality of times. For example, when the total pilot injection amount is 3 mm³, the divisional pilot injection of 1.5 mm³ (the minimum injection amount of the injector 23 in the present embodiment) is carried out twice. Also, when the total pilot injection amount is 5 mm³, the divisional pilot injection of 2.5 mm³ is carried out twice. The amounts are not limited to these. Also, when the divisional pilot injection is executed twice, the injection amount of preceding pilot injection (hereinafter referred to as first pilot injection) does not necessarily match with the injection amount of subsequent pilot injection (hereinafter referred to as second pilot injection). Also, the total pilot injection amount may be secured by the divisional pilot injection executed three times or more. In the explanation below, a case will be described where the divisional pilot injection is executed twice (the first pilot injection and the second pilot injection) for better understanding.

The total pilot injection amount is calculated based on the temperature of mixture in the cylinder at the target diffusion combustion start time and a diffusion combustion start temperature of fuel injected in the main injection. That is, as the temperature of mixture of fuel in the in-cylinder becomes lower than the diffusion combustion start temperature of the fuel, the total pilot injection amount is set larger. Hereinafter, one example of the calculation operation of the total pilot injection amount will be described.

In the calculation operation of the total pilot injection amount, first, the diffusion combustion start temperature of the fuel injected in the main injection is set. The diffusion combustion start temperature is a temperature that is required for the combustion field formed by the fuel (spray) injected in the main injection to transition from low-temperature oxidation reaction to diffusion combustion, e.g., 1000K.

Then, the total pilot injection amount is obtained based on a deviation between the temperature of mixture of the case where it is assumed that the pilot injection is not executed and the diffusion combustion start temperature.

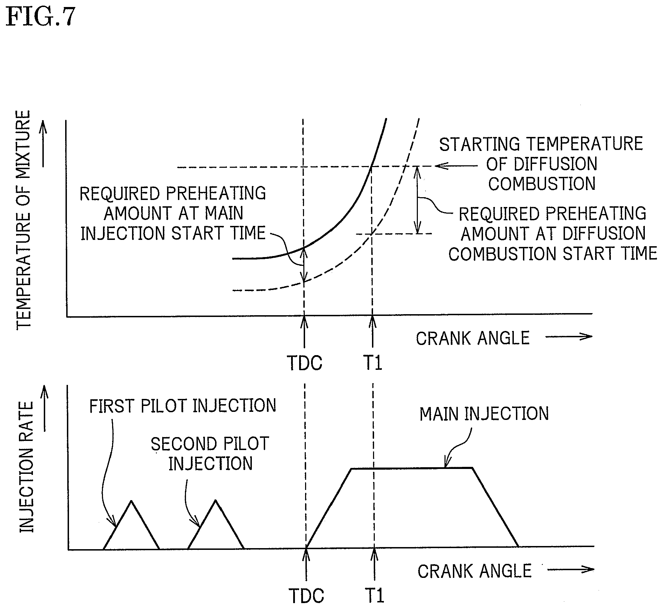

FIG. 7 shows injection patterns (waveform diagram in a lower portion: a case where the pre-injection is not executed) of the pilot injection and the main injection in the case where the divisional pilot injection is executed twice, and variation of the temperature of mixture in the case (waveform diagram in an upper portion). FIG. 7 shows a case where the total pilot injection amount evenly divided in two to be set as the injection amount in the first pilot injection and the second pilot injection.

Of the waveforms showing the variation of the temperature of mixture, that in a dashed line shows the variation of the in-cylinder temperature in the case where the pilot injection is not executed, and that in a solid line shows the variation of the in-cylinder temperature in the case where the mixture temperature reaches "diffusion combustion start temperature" at the target diffusion combustion start time (timing T1 in the diagram). That is, a heat amount required to start the diffusion combustion at the target diffusion combustion start time T1 (heat amount required for the pilot injection) is obtained as "required preheating amount of diffusion combustion start time" shown in the diagram. It is to be noted that the variation of the in-cylinder temperature shown in the dashed line can be assumed based on parameters such as the engine revolution, temperature of a coolant, intake air temperature, and the like.

The total pilot injection amount described above is obtained in order to obtain this "required preheating amount of diffusion combustion start time". In this case, the total pilot injection amount is set in such a manner as to obtain "required heat amount at the main injection start time" in the diagram, whereby securing "required preheating amount of diffusion combustion start time" at the target diffusion combustion start time T1. It is to be noted that an increase in the temperature of mixture after the main injection start (temperature increase toward the diffusion combustion start temperature) is caused by the low-temperature oxidation reaction of the fuel injected in the main injection.

An operation to obtain the total pilot injection amount is as follows for example. A total pilot injection amount map to obtain the total pilot injection amount based on "required heat amount at the main injection start time" is stored in the ROM 102 in advance, and the "required heat amount at the main injection start time" is obtained based on the operating state of the engine 1 and the like and applied to the total pilot injection amount map so as to obtain the total pilot injection amount. The total pilot injection amount map is produced in advance based on experiment, simulation, or the like. Also, the total pilot injection amount may be calculated based on a predetermined mathematical formula in which the "required heat amount at the main injection start time" is a variable.

Thus, the total pilot injection amount is obtained and injected through divisional pilot injection executed twice. Thus, the in-cylinder temperature at the target diffusion combustion start time T1 can be increased up to a diffusion combustion start temperature (e.g., 1000K), and the diffusion combustion of the fuel injected in the main injection starts at the target diffusion combustion start time T1.

It is to be noted that the target diffusion combustion start time T1 is, for example, set as a predetermined time after the compression top dead center of the piston 13 (e.g., ATDC 5°) as described above. The target diffusion combustion start time is not limited to this, and may be adequately delayed in accordance with exhaust emission. That is, in the case of the operation in which the torque of the engine 1 is important, the target diffusion combustion start time T1 is set in the vicinity of the compression top dead center, and in the case of the operation in which the suppression of emissions of NOx and the like are important, the target diffusion combustion start time T1 is set to a delay angle side with respect to the compression top dead center.

Also, the injection start timing of preceding first pilot injection, out of the divisional pilot injection executed twice, for example, is set as a timing after the time point of 80 degrees before compression top dead center of the piston 13 (BTDC) in terms of the crank angle, and the pilot injection executed twice can be completed before the injection start timing of the main injection (for example, compression top dead center of the piston 13: TDC) (the injection timing of the second pilot injection will be described later). That is, an interval between the first pilot injection and the second pilot injection and an interval between the second pilot injection and the main injection are secured that are equal to or longer than an interval (e.g., 200 µsec) determined by responsiveness of each injector 23 (open/close operation speed). Further, for the interval between the first pilot injection and the second pilot injection, the injection start timing of the first pilot injection is set in a such a manner that the interval can be secured that provides the injection timing of the second pilot injection set in "operation in preheating-required case" or "operation in premix-required case" that are described later.

In the pilot injection control of the present embodiment, the operation varies in accordance with functions required for the pilot injection. Specifically, the operation in the preheating-required case in which a spray penetration distance (penetration distance of a spray) of fuel injected in the pilot injection is set to a relatively short distance so as to make the air-fuel ratio rich in the combustion field, to thereby secure a sufficient preheating amount is different from an operation in a premix-required case in which the spray penetration distance (penetration distance of a spray) of fuel injected in the pilot injection is set to a relatively long distance (penetration distance of a spray) so as to make the air-fuel ratio lean in the combustion field, to thereby increase the premixed proportion. That is, the degree of each requirement varies in accordance with the operating state of the engine and the like.

More specifically, for example, when the load of the engine 1 is low, the total fuel injection amount is small, and there is a possibility that the temperature of mixture is difficult to reach the diffusion combustion start temperature at the target diffusion combustion start time T1. Therefore, when the load is low, the spray penetration distance of the fuel injected in the pilot injection is set to a relatively short distance so as to make the air-fuel ratio rich in the combustion field, to thereby secure a sufficient preheating amount. In contrast, for example, in the operating state at the high-load time of the engine 1, at the time of increase in the EGR amount, or the like where the amount of in-cylinder air is relatively small with respect to the fuel injection amount (or the amount of EGR gas) at the high-load time of the engine 1, smoke is likely to be generated due to lack of the amount of oxygen in the cylinder locally. Accordingly, in an operation in such a case, the spray penetration distance of the fuel injected in the pilot injection is set to a relatively long distance so as to make the air-fuel ratio lean in the combustion field, to thereby increase the premixed proportion, and thus an attempt to reduce smoke is facilitated.

Hereinafter, operations in the preheating-required case and the premix-required case will individually be described for better understanding of each operation.

### (First Embodiment of Operation in Preheating-Required Case)

First, a first embodiment of the operation in the preheating-required case will be described. The outline of the operation in the preheating-required case is as follows. Fuel pressure is monitored that repeats ascents and descents in a constant period (repeat periodically) by fuel pressure pulsation in a fuel supply system (more specifically, in the inside of the injector 23) that is generated after the execution of the first pilot injection, and the second pilot injection is executed at the time when the fuel pressure drops to the fuel injection pressure that determines the spray penetration distance to obtain the required preheating amount. More specifically, first, injection pressure required in the second pilot injection (injection pressure to determine the spray penetration distance of fuel injected in the second pilot injection: hereinafter referred to as "second pilot injection pressure setting value") is calculated. Then, after the first pilot injection is executed, the varying fuel pressure in the fuel supply system (internal pressure of the injector 23) is detected by the injector internal pressure sensor (fuel pressure variation recognizing means) 4A, and the second pilot injection is executed at the time when the fuel pressure drops to the second pilot injection pressure setting value.

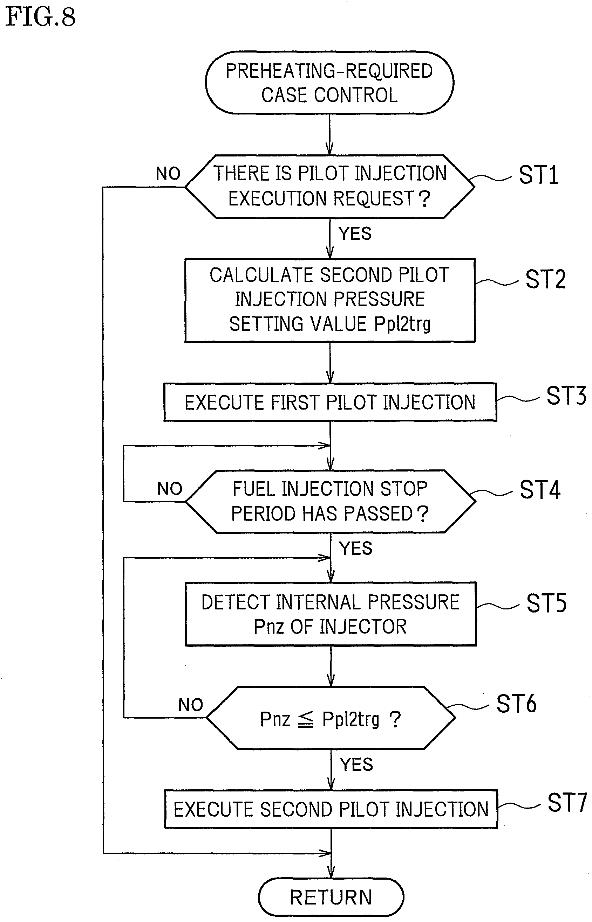

Hereinafter, a control operation in the preheating-required case will be specifically described. FIG. 8 is a flowchart illustrating a procedure of the control operation in the preheating-required case. Every time combustion stroke is executed in each cylinder, this flowchart is executed prior to the combustion stroke.

First, at step ST1, it is determined whether there is a pilot injection execution request. As described above, the pilot injection execution request is generated when the temperature of mixture at the target diffusion combustion start time in the case where it is assumed that the pilot injection is not executed is lower than the diffusion combustion start temperature (in a case where the temperature of mixture is in a variation state shown in a dashed line in FIG. 7).

When there is no pilot injection execution request, that is, the temperature of mixture at the target diffusion combustion start time reaches the diffusion combustion start temperature without the execution of preheating operation by the pilot injection, it is determined to be NO at step ST1, and the process is on standby until the next combustion stroke is executed without executing the pilot injection (until the piston 13 in the cylinder that is at the stage of combustion stroke next time reaches the vicinity of the compression top dead center).

When there is the pilot injection execution request, and thus it is determined to be YES at step ST1, the process proceeds to step ST2 where a second pilot injection pressure setting value Ppl2trg is calculated (target injection pressure setting operation of subsequent auxiliary injection by a target injection pressure setting means). The second pilot injection pressure setting value Ppl2trg specifies a position of the combustion field of a spray of fuel injected in the second pilot injection and is set in accordance with required preheating amount with respect to the mixture. That is, the second pilot injection pressure setting value Ppl2trg is set as a small value in such a manner that the air-fuel ratio in the combustion field is set on a rich side to thereby secure sufficient preheating amount as the required preheating amount with respect to the mixture increases. That is, the second pilot injection pressure setting value Ppl2trg is set as a small value so as to shorten the spray penetration distance to thereby set the air-fuel ratio on the rich side in the combustion field.

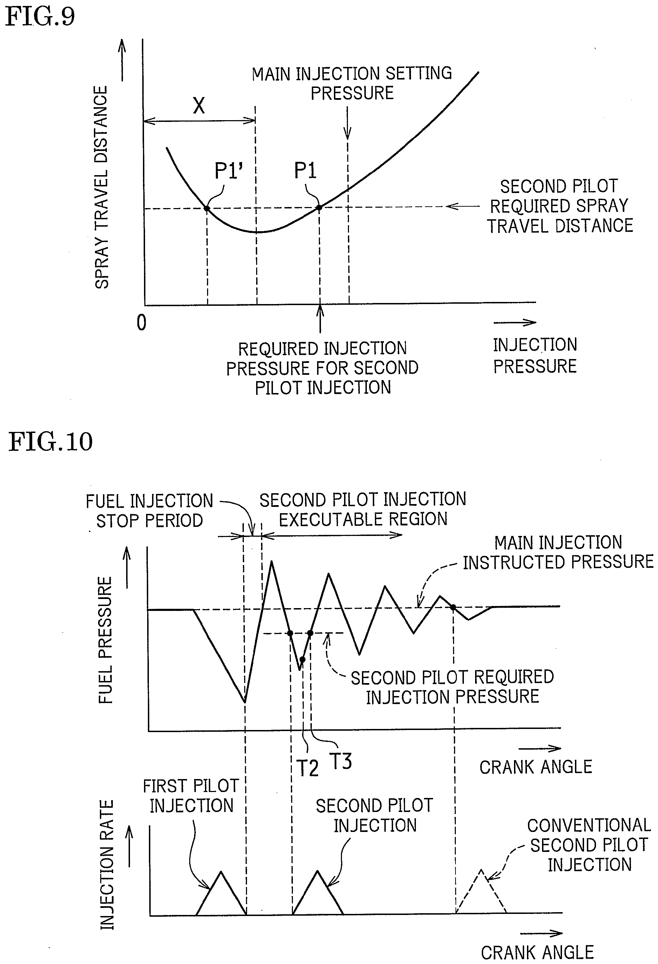

FIG. 9 is a spray penetration distance map illustrating a relation between the fuel pressure and the spray penetration distance. According to the spray penetration distance map, the fuel injection pressure is obtained based on the spray penetration distance required in the second pilot injection (second pilot required spray penetration distance in the diagram), and the fuel injection pressure is set as the second pilot injection pressure setting value Ppl2trg (second pilot injection required injection pressure in the diagram). It is to be noted that the second pilot injection pressure setting value Ppl2trg is set as a low value, compared with the main injection setting pressure (target rail pressure set by the engine load and the like described above).

It is to be noted that a region X in FIG. 9 is a region where the spray penetration distance becomes shorter as the fuel injection pressure increases. This region is a region where the spray penetration distance becomes short because the diameter of the particles of droplets of the fuel injected from the injector 23 is large due to low fuel injection pressure.
In this embodiment, the pilot injection pressure is not used in the region X. That is, the pilot injection pressure to obtain the second pilot required spray penetration distance is obtained as P1 and P1' in the diagram, but the diameter of the particles of droplets of the fuel is large under the pilot injection pressure P1', which does not form an appropriate combustion field, and for this reason, the second pilot injection pressure setting value Ppl2trg is obtained as P1 in the diagram.

In the manner described above, after the second pilot injection pressure setting value Ppl2trg is calculated, the process proceeds to step ST3 where the first pilot injection is executed. Subsequently, at step ST4, it is determined whether a predetermined fuel injection stop period has passed after the completion of the first pilot injection. The fuel injection stop period is an interval determined by the responsiveness of the injector 23 (velocity of open/close operation), and for example, is set as 200 µsec.

FIG. 10 is a diagram illustrating a relation between the fuel pressure pulsation generated with the execution of the first pilot injection and the execution timing of the second pilot injection, in which an upper section shows the variation of the internal pressure of the injector 23, and a lower section shows the execution timing of each pilot injection. As shown in FIG. 10, when the backward movement of a needle in the injector 23 opens the injection hole by which the first pilot injection is carried out, and the forward movement of the needle closes the injection hole (closing the valve of the injector) by which the fuel injection is stopped, variation in pressure occurs in the fuel in the injector 23. The pressure repeats ascent and descent, centering on the main injection instructed pressure (target rail pressure) as central pressure and converges at the main injection instructed pressure along with a lapse of time. Accordingly, when the second pilot injection is carried out at the timing when the fuel pressure is higher than the main injection instructed pressure, the fuel pressure of the fuel injected in the second pilot injection increases, and the spray penetration distance is extended. Conversely, when the second pilot injection is carried out at the timing when the fuel pressure is lower than the main injection instructed pressure, the fuel pressure of the fuel injected in the second pilot injection decreases, and the spray penetration distance is shortened.

When the fuel injection stop period has not passed yet after the execution of the first pilot injection, and thus the it is determined to be NO at step ST4, the process waits until the fuel injection stop period passes. Then, when the fuel injection stop period has passed, and thus the it is determined to be YES at step ST4, the process proceeds to step ST5 where the internal pressure Pnz of the injector 23 is detected by the injector internal pressure sensor 4A, and the process proceeds to step ST6. At step ST6, it is determined whether the internal pressure Pnz of the injector 23 detected at step ST5 is reduced to be equal to or lower than the second pilot injection pressure setting value Ppl2trg calculated at step ST2 (second pilot required injection pressure in FIG. 10).

When the internal pressure Pnz is not yet reduced to the pilot injection pressure setting value Ppl2trg, and thus the it is determined to be NO at step ST6, the process returns to step ST5 where the internal pressure Pnz of the injector 23 is detected again (the detection value of the internal pressure Pnz is renewed), and the process returns to determination operation in step ST6.

When the internal pressure Pnz of the injector 23 reaches or becomes lower than the pilot injection pressure setting value Ppl2trg, and thus the it is determined to be YES at step ST6, the process proceeds to step ST7 where second pilot injection is executed (execution of subsequent auxiliary injection by a subsequent auxiliary injection executing means). That is, second pilot injection is executed under the injection pressure having the pilot injection pressure setting value Ppl2trg (see an injection rate waveform of the second pilot injection in FIG. 10). The execution timing of the second pilot injection shown in FIG. 10 is set to a time point when, after the completion of the first pilot injection, the internal pressure Pnz of the injector 23 reaches the second pilot injection pressure setting value Ppl2trg in a first fuel supply system internal pressure descent period.

When the internal pressure Pnz of the injector 23 reaches or becomes lower than the pilot injection pressure setting value Ppl2trg before the fuel injection stop period passes, the second pilot injection is not executed until the fuel injection stop period passes. For example, when the timing T2 in FIG. 10 is the time when the fuel injection stop period has passed, the second pilot injection is executed at the timing T2 or a timing T3 when, in the diagram, the internal pressure Pnz reaches the pilot injection pressure setting value Ppl2trg after the timing T2.

Thus, when the second pilot injection is executed, the injection pressure of the second pilot injection is set lower than the main injection instructed pressure (corresponds with the injection pressure of the first pilot injection), and the spray penetration distance in the combustion chamber 3 becomes shorter than the spray penetration distance of fuel injected in the first pilot injection without reducing the injection amount (the combustion field can be formed in the periphery of the injector 23). This achieves the richness of the air-fuel ratio of the mixture in the combustion field formed by the fuel injected in the second pilot injection and adequately raises the temperature of the combustion field so as to obtain a sufficient preheating amount. As a result, the ignition time in the main injection (start time of diffusion combustion) can appropriately be obtained (can be matched with target diffusion combustion start time).

Also, conventionally, the second pilot injection has been generally executed after the fuel pressure pulsation converges, as seen in the second pilot injection shown in a dashed line in FIG. 10. In contrast, in the present embodiment, the second pilot injection is executed with effective use of the fuel pressure pulsation, so that the execution timing of the second pilot injection can be shifted to the advance angle side, and the improvement of the fuel consumption rate can be achieved.

### (Second Embodiment of Operation in Preheating-Required Case)

Next, a second embodiment of the operation in the preheating-required case will be described. The present embodiment is different from the first embodiment in that a required fuel injection amount of the first pilot injection is set in a manner as to steadily obtain the second pilot injection pressure setting value Ppl2trg that is a target injection pressure value in the second pilot injection. That is, the setting operation of a required fuel injection amount of the first pilot injection is carried out in order to ensure the acquisition of the second pilot injection pressure setting value Ppl2trg.

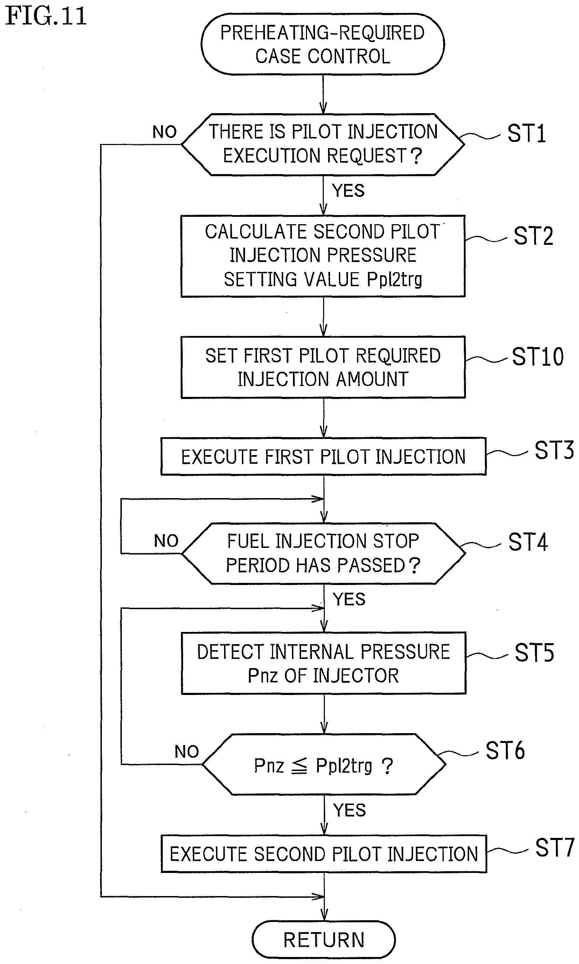

Hereinafter, the control operation in the preheating-required case will be specifically described. FIG. 11 is a flowchart illustrating a procedure for the control operation in the preheating-required case. Every time combustion stroke is executed in each cylinder, this flowchart is also executed prior to the combustion stroke. Also, the operations in the steps ST1 to ST7 are similar to those of the first embodiment described above, and the descriptions will be omitted.

A featured operation in this embodiment is a setting operation of the required first pilot injection amount at step ST10 executed after step ST2 (determining operation of the injection amount of the preceding auxiliary injection by a preceding auxiliary injection amount determining means). Hereinafter, the setting operation of the required first pilot injection amount will be described.

The amplitude of variation (fuel pressure pulsation) of the internal pressure of the injector 23 that is generated after the execution of the first pilot injection increases along with the increase in the injection amount of the first pilot injection. That is, the minimum value of the fuel pressure during the generation of the fuel pressure pulsation (a minimum value of the injection pressure in the second pilot injection) is reduced along with the increase in the injection amount of the first pilot injection. Therefore, the injection amount of the first pilot injection is set in such a manner that the minimum value of the fuel pressure during the generation of the fuel pressure pulsation reaches the second pilot injection pressure setting value Ppl2trg or lower, so that the second pilot injection pressure setting value Ppl2trg can surely be obtained.

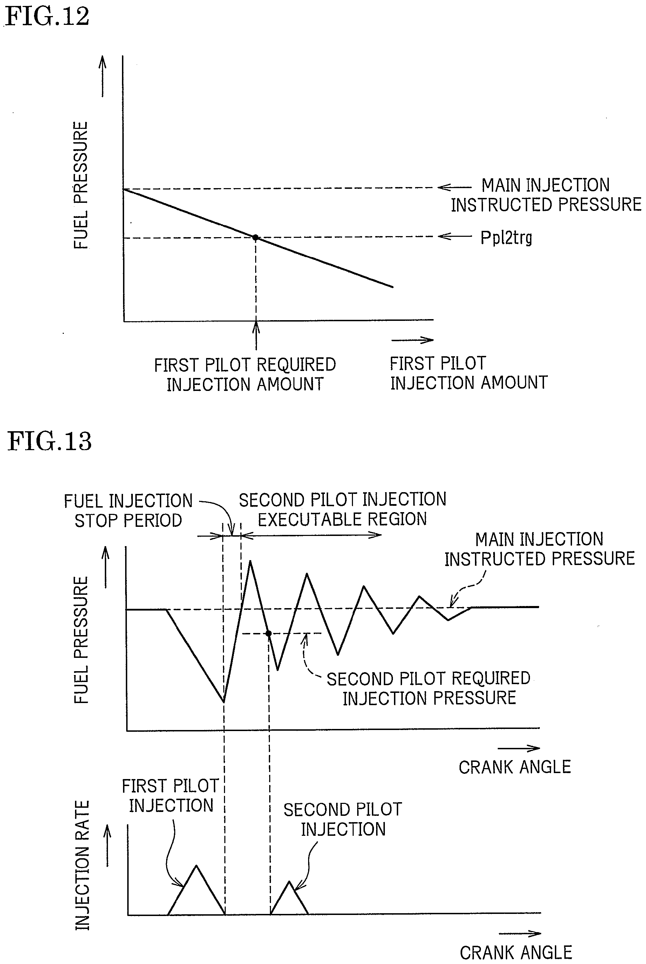

FIG. 12 is a first pilot injection amount setting map illustrating a relation between the injection amount of the first pilot injection and the minimum pressure of the fuel pressure during the generation of the fuel pressure pulsation that varies along with the injection amount. In FIG. 12, when the second pilot injection pressure setting value is set as Ppl2trg in the diagram (when the value is set as Ppl2trg at step ST2), and the injection amount of the first pilot injection is set to be equal to or higher than the required first pilot injection amount in the diagram, the minimum value of the fuel pressure during the generation of the fuel pressure pulsation reaches or becomes lower than the second pilot injection pressure setting value Ppl2trg.

Based on this, at step ST10, the required first pilot injection amount is set in accordance with the first pilot injection amount setting map.

Thus, when the required first pilot injection amount is set, there certainly appears the timing at which the internal pressure Pnz of the injector 23 that is detected by the injector internal pressure sensor 4A is reduced to the second pilot injection pressure setting value Ppl2trg or lower. That is, the timing when it is determined to be YES at step ST6 certainly appears, which makes it possible to execute the second pilot injection at step ST7.

FIG. 13 is a diagram illustrating a relation between the fuel pressure pulsation generated with the execution of the first pilot injection and the execution timing of the second pilot injection, in which an upper section shows the variation of the internal pressure of the injector 23, and a lower section shows the execution timing of each pilot injection. As shown in FIG. 13, when the first pilot injection is stopped, the variation in pressure is generated in the fuel in the injector 23, and the pressure repeats ascent and descent, centering on the main injection instructed pressure (target rail pressure) as central pressure and converges at the target rail pressure along with a lapse of time. Then, the internal pressure Pnz of the injector 23 in this case is reduced to the second pilot injection pressure setting value Ppl2trg or lower (second pilot required injection pressure in FIG. 13). The second pilot injection is carried out at the timing when the internal pressure Pnz of the injector 23 is reduced to the second pilot injection pressure setting value Ppl2trg or lower, the injection pressure of fuel injected in the second pilot injection becomes low, and the spray penetration distance is shortened. In FIG. 13, it is to be noted that the injection amount of the first pilot injection is set larger than the injection amount of the second pilot injection in order to reduce the internal pressure Pnz of the injector 23 to the second pilot injection pressure setting value Ppl2trg or lower. Other operation is similar to that of the first embodiment described above.

Thus, the second pilot injection is executed as described above, in the present embodiment. Accordingly, the injection pressure of the second pilot injection is set lower than the instructed pressure of the main injection, and the spray penetration distance in the combustion chamber 3 becomes shorter than the spray penetration distance of the fuel injected in the first pilot injection without reducing the injection amount. This achieves the richness of the air-fuel ratio of the mixture in the combustion field formed by the fuel injected in the second pilot injection and adequately raises the temperature of the combustion field so as to obtain the sufficient preheating amount. As a result, the ignition time in the main injection (start time of diffusion combustion) can appropriately be obtained (can be matched with target diffusion combustion start time). Also, in the present embodiment, the injection amount of the first pilot injection is set in a manner that the minimum value of the fuel pressure during the generation of the fuel pressure pulsation reaches or becomes lower than the second pilot injection pressure setting value Ppl2trg, which makes it possible to surely obtain the effects described above.

### (First Embodiment of Operation in Premix-Required Case)

Next, a first embodiment of the operation in the premix-required case will be described. The outline of the operation in the premix-required case is as follows. Fuel pressure is monitored that repeats ascent and descent in a constant period by variation (fuel pressure pulsation) of the fuel pressure in the fuel supply system (more specifically, the internal pressure of the injector 23) that is generated after the execution of the first pilot injection, and the second pilot injection is executed at the time when the fuel pressure ascends to the fuel injection pressure that determines the spray penetration distance to obtain the required premixed amount. More specifically, first, injection pressure required in the second pilot injection (second pilot injection pressure setting value) is calculated. Then, after the first pilot injection is executed, the internal pressure of the injector 23 is detected by the injector internal pressure sensor 4A, and the second pilot injection is executed at the time when the fuel pressure ascends to the second pilot injection pressure setting value.

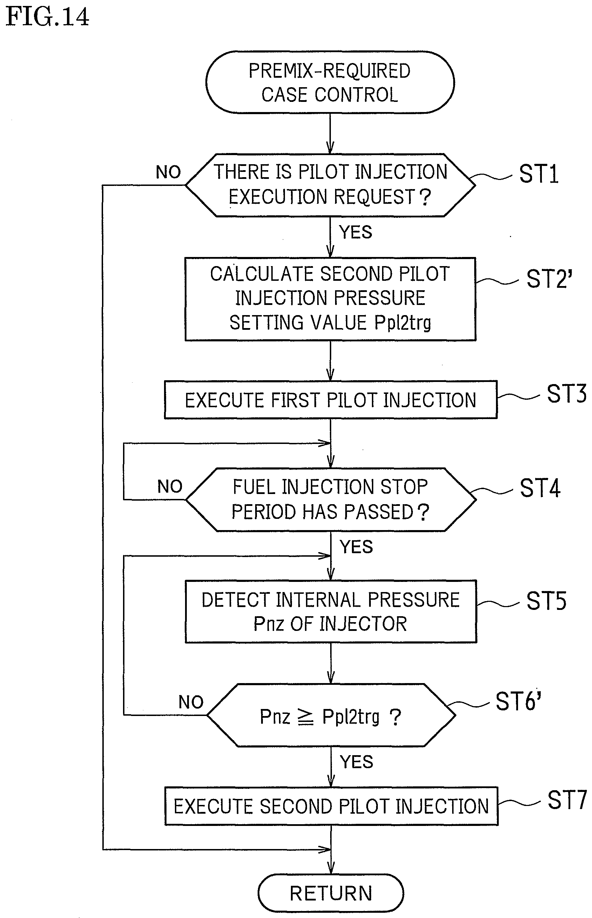

Hereinafter, a control operation in the premix-required case will be specifically described. FIG. 14 is a flowchart illustrating a procedure for the control operation in the premix-required case. Every time combustion stroke is executed in each cylinder, this flowchart is also executed prior to the combustion stroke. In the steps in this flowchart, the difference between the operation in the first embodiment of the preheating-required case (each step of the flowchart in FIG. 8) and the operation in the premix-required case lies in step ST2' and step ST6'.

At step ST2', the second pilot injection pressure setting value Ppl2trg is calculated. The second pilot injection pressure setting value Ppl2trg of the present embodiment determines a position of the combustion field of a spray of the fuel injected in the second pilot injection and is set in accordance with required premixed amount with respect to the mixture. That is, the second pilot injection pressure setting value Ppl2trg is set as a large value in such a manner that the air-fuel ratio in the combustion field is set on a lean side so as to secure larger premixed amount as the required premixed amount with respect to the mixture increases. That is, the second pilot injection pressure setting value Ppl2trg is set as a large value so as to extend a spray penetration distance, whereby setting the air-fuel ratio on the lean side in the combustion field.

In contrast, at step ST6', it is determined whether the internal pressure Pnz of the injector 23 detected at step ST5 ascends to the second pilot injection pressure setting value Ppl2trg or higher that is calculated at step ST2'. That is, when the internal pressure Pnz does not ascend to the second pilot injection pressure setting value Ppl2trg, and thus the it is determined to be NO at step ST6' the process returns to step ST5 where the internal pressure Pnz of the injector 23 is detected again (the detection value of the internal pressure Pnz is updated), and the process returns to determination operation of step ST6'. When the internal pressure Pnz of the injector 23 reaches or exceeds the second pilot injection pressure setting value Ppl2trg, and thus it is determined to be YES at step ST6', the process proceeds to step ST7 where second pilot injection is executed. That is, second pilot injection is executed under the injection pressure having the second pilot injection pressure setting value Ppl2trg (or equal to or higher than the second pilot injection pressure setting value Ppl2trg).

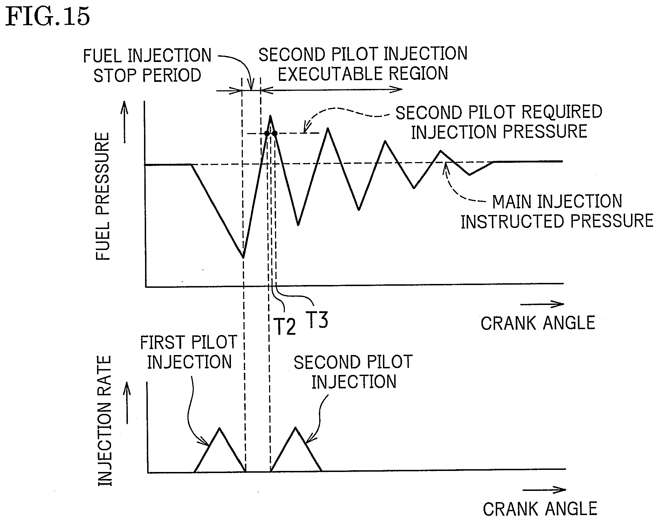

FIG. 15 is a diagram illustrating a relation between the fuel pressure pulsation generated with the execution of the first pilot injection and the execution timing of the second pilot injection in the present embodiment, in which an upper section shows the variation of the internal pressure of the injector 23, and a lower section shows the execution timing of each pilot injection. As shown in FIG. 15, when the first pilot injection is stopped, the variation in pressure is generated in the fuel in the injector 23, and the pressure repeats ascent and descent, centering on the target rail pressure (instructed injection pressure) as central pressure and converges at the target rail pressure along with a lapse of time. Then, the second pilot injection is carried out at the timing when the internal pressure Pnz of the injector 23 ascends to the second pilot injection pressure setting value Ppl2trg or higher, and the injection pressure of the fuel injected in the second pilot injection is enhanced, and the spray penetration distance is extended. It is to be noted that the execution timing of the second pilot injection shown in FIG. 15 is set to a time when, after the completion of the first pilot injection, the internal pressure Pnz of the injector 23 reaches the second pilot injection pressure setting value Ppl2trg in a first fuel supply system internal pressure ascent period.

When the internal pressure Pnz of the injector 23 reaches or exceeds the second pilot injection pressure setting value Ppl2trg before the fuel injection stop period passes, the second pilot injection is not executed until the fuel injection stop period passes. For example, when the timing T2 in FIG. 15 is the time when the fuel injection stop period has passed, the second pilot injection is executed at the timing T2 or a timing T3 when, in the diagram, the internal pressure Pnz reaches the pilot injection pressure setting value Ppl2trg after a lapse of the timing T2.

Thus, when the second pilot injection is executed, the injection pressure of the second pilot injection is set higher than the main injection instructed pressure (corresponds with the injection pressure of the first pilot injection), and the spray penetration distance in the combustion chamber 3 becomes longer than the spray penetration distance of the fuel injected in the first pilot injection. This achieves the leanness of the air-fuel ratio of the mixture in the combustion field and reduces the amount of smoke generated to facilitate an attempt to improve exhaust emission.

### (Second Embodiment of Operation in Premix-Required Case)

Next, a second embodiment of the operation in the premix-required case will be described. The present embodiment is different from the first embodiment in that a required fuel injection amount of the first pilot injection is set in a manner as to surely obtain the second pilot injection pressure setting value Ppl2trg that is a target injection pressure value in the second pilot injection. That is, the setting operation of the required fuel injection amount of the first pilot injection is carried out in order to ensure the acquisition of the second pilot injection pressure setting value Ppl2trg.

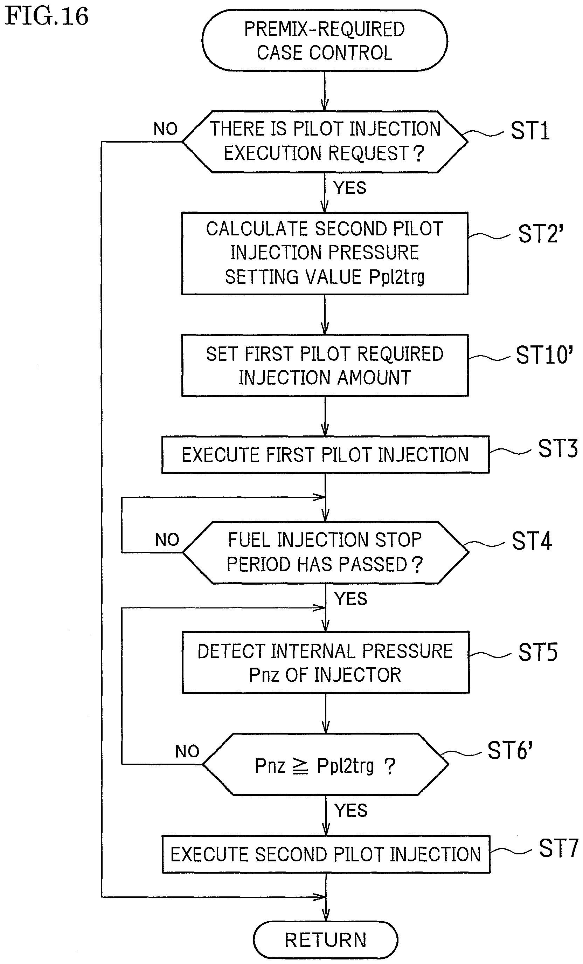

Hereinafter, the control operation in the preheating-required case will be specifically described. FIG. 16 is a flowchart illustrating a procedure for the control operation in the preheating-required case. Every time combustion stroke is executed in each cylinder, this flowchart is also executed prior to the combustion stroke. Also, the operations of the steps ST1 to ST7 are similar to those of the each embodiment described above, and the descriptions will be omitted.

A featured operation in this embodiment is a setting operation of the required first pilot injection amount at step ST10' executed after step ST2' (specifying operation of the injection amount of the preceding auxiliary injection by a preceding auxiliary injection amount determining means). Hereinafter, the setting operation of the required first pilot injection amount will be described.

The amplitude of variation (fuel pressure pulsation) of the internal pressure of the injector 23 that is generated after the execution of the first pilot injection increases as the injection amount of the first pilot injection is increased. That is, the maximum value of the fuel pressure during the generation of the fuel pressure pulsation (a maximum value of the injection pressure of the second pilot injection) becomes higher as the injection amount of the first pilot injection increases. Therefore, the injection amount of the first pilot injection is set in such a manner that the maximum value of the fuel pressure during the generation of the fuel pressure pulsation reaches or exceeds the second pilot injection pressure setting value Ppl2trg, so that the second pilot injection pressure setting value Ppl2trg can surely be obtained.

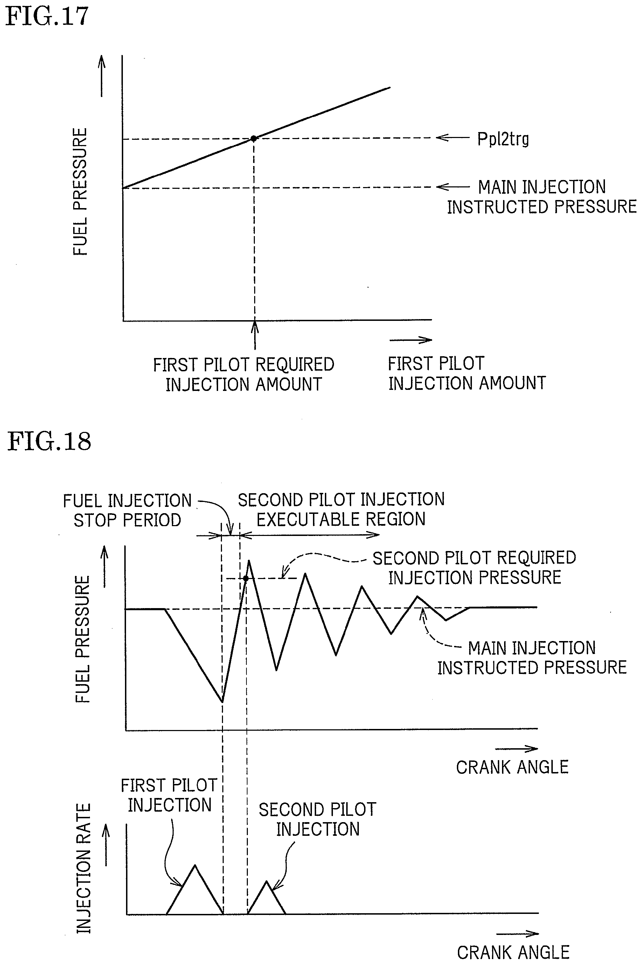

FIG. 17 is a first pilot injection amount setting map illustrating a relation between the injection amount of the first pilot injection and the maximum pressure of the fuel pressure during the generation of the fuel pressure pulsation varies along with the injection amount.
In FIG. 17, when the second pilot injection pressure setting value is set as Ppl2trg in the diagram (when the value is set as Ppl2trg at step ST2'), and the injection amount of the first pilot injection is set to be equal to or higher than the required first pilot injection amount in the diagram, the maximum value of the fuel pressure during the generation of the fuel pressure pulsation reaches or exceeds the second pilot injection pressure setting value Ppl2trg.

Based on this, at step ST10', the required first pilot injection amount is set in accordance with the first pilot injection amount setting map.

Thus, when the required first pilot injection amount is set, there certainly appears the timing at which the internal pressure Pnz of the injector 23 that is detected by the injector internal pressure sensor 4A ascends to the second pilot injection pressure setting value Ppl2trg or higher. That is, the timing when it is determined to be YES at step ST6' certainly appears, which makes it possible to execute the second pilot injection at step ST7.

FIG. 18 is a diagram illustrating a relation between the fuel pressure pulsation generated with the execution of the first pilot injection and the execution timing of the second pilot injection in the present embodiment, in which an upper section shows the variation of the internal pressure of the injector 23, and a lower section shows the execution timing of each pilot injection. As shown in FIG. 18, when the first pilot injection is stopped, variation in pressure is generated in the fuel in the injector 23, and the pressure repeats ascent and descent, centering on the main injection instructed pressure (target rail pressure) as central pressure and converges at the target rail pressure along with a lapse of time. Then, the internal pressure Pnz of the injector 23 in this case ascends to the second pilot injection pressure setting value Ppl2trg or higher (second pilot required injection pressure in FIG. 18). The second pilot injection is carried out at the timing when the internal pressure Pnz of the injector 23 ascends to the second pilot injection pressure setting value Ppl2trg or higher, the injection pressure of the fuel injected in the second pilot injection is enhanced, and the spray penetration distance is extended. It is to be noted that, in FIG. 18, the injection amount of the first pilot injection is set larger than the injection amount of the second pilot injection in order to increase the internal pressure Pnz of the injector 23 to the second pilot injection pressure setting value Ppl2trg or higher. Other operation is similar to that of the first embodiment described above.

Thus, the second pilot injection is executed as described above, in the present embodiment, the injection pressure of the second pilot injection is set higher than the instructed pressure of the main injection, and the spray penetration distance in the combustion chamber 3 becomes longer than the spray penetration distance of the fuel injected in the first pilot injection. This achieves the leanness of the air-fuel ratio of the mixture in the combustion field and reduces the amount of smoke generated so as to facilitate an attempt to improve exhaust emission. Also, in the present embodiment, the injection amount of the first pilot injection is set in a manner that the maximum value of the fuel pressure during the generation of the fuel pressure pulsation reaches or exceeds the second pilot injection pressure setting value Ppl2trg, which makes it possible to surely obtain the effects described above.

### -Other Embodiment-

The embodiment above describes a case where the present invention is applied to the inline four-cylinder diesel engine mounted in an automobile. The present invention can be applied not only to the engine for the automobile but also to engines that are used for various purposes. Also, the number of cylinder and types of engines (inline-type engines, V-type engines, and the like) are not limited in particular.

In the embodiment, the maniveter 77 includes the NSR catalyst 75 and the DPNR catalyst 76. Alternatively, the maniverter 77 may include the NSR catalyst 75 and a DPF (Diesel Particulate Filter).

Also, in the embodiment, the routine of each flowchart (FIG. 8, FIG. 11, FIG. 14, and FIG. 16) is executed for the combustion stroke of the engine 1. This should not be construed in a limiting sense and in the present invention, the execution timing of the second pilot injection may be set in accordance with map values of a control map stored in the ROM 102 in advance.

Also, in the embodiment, the internal pressure of the injector 23 is detected by the injector internal pressure sensor 4A. Alternatively, the internal pressure of the injector 23 may be assumed based on internal rail pressure detected by the rail pressure sensor 41. Also, a fuel injection pressure map having parameters such as the fuel injection pressure at the time of executing the main injection and a valve opening period in the main injection (a map by which the value of the fuel injection pressure in fluctuation can be obtained for each crank angle) may be stored in the ROM 102 in advance, and the fuel pressure for each crank angle may be obtained based on the fuel injection pressure map.

Also, in the operation in the preheating-required case, the second pilot injection is executed at the time when, after the completion of the first pilot injection, the internal pressure Pnz of the injector 23 reaches the second pilot injection pressure setting value Ppl2trg in the first fuel supply system internal pressure descent period. Also, in the operation in the premix-required case, the second pilot injection is executed at the time when, after the completion of the first pilot injection, the internal pressure Pnz of the injector 23 reaches the second pilot injection pressure setting value Ppl2trg in the first fuel supply system internal pressure ascent period. These are for improving the fuel consumption ratio by executing the second pilot injection on the advance angle side as much as possible. This should not be construed in a limiting sense and in the present invention, the execution timing of the second pilot injection may be set on the delay angle side to achieve the reduction of combustion noise accompanied with the execution of the second pilot injection. That is, as the operation in the preheating-required case, the second pilot injection is executed at the time when, after the completion of the first pilot injection, the internal pressure Pnz of the injector 23 reaches the second pilot injection pressure setting value Ppl2trg in a second or later fuel supply system internal pressure descent period or in a second or later fuel supply system internal pressure ascent period. As the operation in the premix-required case, the second pilot injection is executed at the time when, after the completion of the first pilot injection, the internal pressure Pnz of the injector 23 reaches the second pilot injection pressure setting value Ppl2trg in the second or later fuel supply system internal pressure descent period or in the second or later fuel supply system internal pressure ascent period.

### Industrial Applicability

The present invention can be applied to fuel injection control that can set injection pressure as desired when executing pilot injection, for a common rail in-cylinder direct injection multi-cylinder diesel engine mounted in an automobile.

### Description of the Reference Numeral

- 1: Engine (Internal combustion engine)
- 2: Fuel supply system
- 23: Injector (Fuel injection valve)
- 3: Combustion chamber
- 4A: Injector internal pressure sensor (Fuel pressure variation recognizing means)
- 100: ECU

## Claims

1. A fuel injection control apparatus of a compression self-igniting internal combustion engine (1) that is configured to carry out at least main injection and auxiliary injection of plural times to be executed prior to the main injection, as a fuel injection operation from a fuel injection valve (23) provided in a fuel supply system (2), the fuel injection control apparatus comprising:
a fuel pressure variation recognizing means for recognizing fuel pressure in the fuel supply system (2) that periodically changes with completion of preceding auxiliary injection out of the auxiliary injection of plural times; the fuel injection control apparatus being **characterized by**
a target injection pressure setting means (41) for setting target injection pressure of subsequent auxiliary injection to be executed after the completion of the preceding auxiliary injection in accordance with the operations required for the auxiliary injection, an operation being the premix-required case, in which the target injection pressure of the subsequent auxiliary injection is set higher than the main setting pressure, to increase the premixed proportion of the fuel injected in the subsequent auxiliary injection, and another operation being the preheating-required case, in which the target injection pressure of the subsequent auxiliary injection is set lower than the main setting pressure, to secure the in-cylinder preheating by the fuel injected in the subsequent auxiliary injection; and
a subsequent auxiliary injection executing means for executing the subsequent auxiliary injection at a time when the fuel pressure in the fuel supply system (2) that is recognized by the fuel pressure variation recognizing means reaches the target injection pressure set by the target injection pressure setting means.

2. The fuel injection control apparatus of the internal combustion engine (1) according to claim 1, wherein the target injection pressure of the subsequent auxiliary injection is set based on a target value of a spray penetration distance of the fuel injected in the subsequent auxiliary injection in a combustion chamber (3).

3. The fuel injection control apparatus of the internal combustion engine (1) according to claim 1 or 3, wherein, in the preheating-required case, the subsequent auxiliary injection executing means is configured to execute the subsequent auxiliary injection, after the completion of the preceding auxiliary injection, at a time when the fuel pressure reaches the target injection pressure in a first fuel supply system internal pressure descent period.

4. The fuel injection control apparatus of the internal combustion engine (1) according to claim 1 or 3, wherein, in the premix-required case, the subsequent auxiliary injection executing means is configured to execute the subsequent auxiliary injection, after the completion of the preceding auxiliary injection, at a time when the fuel pressure reaches the target injection pressure in a first fuel supply system internal pressure ascent period.

5. The fuel injection control apparatus of the internal combustion engine (1) according to claim 1 or 3, further comprising a preceding auxiliary injection amount determining means for determining an injection amount of the preceding auxiliary injection in a manner that, in the preheating-required case, a minimum value of the fuel pressure in the fuel supply system (2) that periodically changes with the completion of the preceding auxiliary injection becomes equal to or lower than the target injection pressure set by the target injection pressure setting means.

6. The fuel injection control apparatus of the internal combustion engine (1) according to claim 1 or 3, further comprising a preceding auxiliary injection amount determining means for determining an injection amount of the preceding auxiliary injection in a manner that, in the premix-required case, a maximum value of the fuel pressure in the fuel supply system (2) that periodically changes with the completion of the preceding auxiliary injection becomes equal to or higher than the target injection pressure set by the target injection pressure setting means.

## Patentansprüche

1. Kraftstoffeinspritzsteuergerät einer Kompressionsselbstzündungsbrennkraftmaschine (1), die dazu konfiguriert ist, zumindest eine Haupteinspritzung und eine mehrmalige Hilfseinspritzung, die vor der Haupteinspritzung auszuführen ist, als einen Kraftstoffeinspritzbetrieb von einem Kraftstoffeinspritzventil (23), das in einem Kraftstoffzuführsystem (2) vorgesehen ist, durchzuführen, wobei das Kraftstoffeinspritzsteuergerät Folgendes aufweist:
ein Kraftstoffdruckschwankungserkennungsmittel zum Erkennen eines Kraftstoffdrucks in dem Kraftstoffzuführsystem (2), der sich mit der Vollendung der vorangehenden Hilfseinspritzung von den mehrmaligen Hilfseinspritzungen periodisch ändert; wobei das Kraftstoffeinspritzsteuergerät **gekennzeichnet ist durch**
ein Solleinspritzdruckfestlegungsmittel (41) zum Festlegen des Solleinspritzdrucks einer nachfolgenden Hilfseinspritzung, die nach dem Vollenden der vorangehenden Hilfseinspritzung auszuführen ist, in Übereinstimmung mit den für die Hilfseinspritzung erforderlichen Betrieben, wobei ein Betrieb ein Fall ist, der ein Vorgemisch erfordert, in welchem der Solleinspritzdruck der nachfolgenden Hilfseinspritzung höher als der Hauptfestlegungsdruck festgelegt ist, um den vorgemischten Anteil des in der nachfolgenden Hilfseinspritzung eingespritzten Kraftstoffs zu erhöhen, und ein anderer Betrieb der Fall ist, der das Vorheizen erfordert, bei welchem der Solleinspritzdruck der nachfolgenden Hilfseinspritzung niedriger als der Hauptfestlegungsdruck festgelegt ist, um das Innenzylindervorheizen **durch** den in der nachfolgenden Hilfseinspritzung eingespritzten Kraftstoff sicherzustellen, und
ein Nachfolgehilfseinspritzungsausführungsmittel zum Ausführen der nachfolgenden Hilfseinspritzung zu einer Zeit, zu der der Kraftstoffdruck in dem Kraftstoffzuführsystem (2), der **durch** das Kraftstoffdruckschwankungserkennungsmittel erkannt wird, den **durch** das Solleinspritzdruckfestlegungsmittel festgelegten Solleinspritzdruck erreicht.

2. Kraftstoffeinspritzsteuergerät der Brennkraftmaschine (1) gemäß Anspruch 1, wobei der Solleinspritzdruck der nachfolgenden Hilfseinspritzung auf Grundlage eines Sollwerts einer Strahldurchdringungsstrecke des in der nachfolgenden Hilfseinspritzung eingespritzten Kraftstoffs in eine Brennkammer (3) festgelegt wird.

3. Kraftstoffeinspritzsteuergerät der Brennkraftmaschine (1) gemäß Anspruch 1 oder 3, wobei in dem Fall, der das Vorheizen erfordert, das Nachfolgehilfseinspritzungsausführungsmittel so konfiguriert ist, dass es die nachfolgende Hilfseinspritzung nach dem Vollenden der vorangehenden Hilfseinspritzung zu einer Zeit ausführt, zu der der Kraftstoffdruck den Solleinspritzdruck in einer ersten Kraftstoffzuführsysteminnendruckabfallzeitspanne erreicht.

4. Kraftstoffeinspritzsteuergerät der Brennkraftmaschine (1) gemäß Anspruch 1 oder 3, wobei das Nachfolgehilfseinspritzausführungsmittel in dem Fall, der das Vormischen erfordert, so konfiguriert ist, dass es die nachfolgende Hilfseinspritzung nach dem Vollenden der vorhergehenden Hilfseinspritzung zu einer Zeit ausführt, zu der der Kraftstoffdruck den Solleinspritzdruck in einer ersten Kraftstoffzuführsysteminnendruckzunahmezeitspanne erreicht.

5. Kraftstoffeinspritzsteuergerät der Brennkraftmaschine (1) gemäß Anspruch 1 oder 3, ferner mit einem Vorangehende-Hilfseinspritzungsmengenbestimmungsmittel zum Bestimmen einer Einspritzmenge der vorangehenden Hilfseinspritzung derart, dass in dem Fall, der das Vorheizen erfordert, ein minimaler Wert des Kraftstoffdrucks in dem Kraftstoffzuführsystem (2), der sich mit der Vollendung der vorangehenden Hilfseinspritzung periodisch ändert, gleich wie oder kleiner als der durch das Solleinspritzdruckfestlegungsmittel festgelegte Solleinspritzdruck wird.

6. Kraftstoffeinspritzsteuergerät der Brennkraftmaschine (1) gemäß Anspruch 1 oder 3, ferner mit einem Vorangehende-Hilfseinspritzungsmengenbestimmungsmittel zum Bestimmen einer Einspritzmenge der vorangehenden Hilfseinspritzung derart, dass in dem Fall, der das Vorgemisch erfordert, ein maximaler Wert des Kraftstoffdrucks in dem Kraftstoffzuführsystem (2), der sich mit der Vollendung der vorangehenden Hilfseinspritzung periodisch ändert, gleich wie oder höher als der durch das Solleinspritzdruckfestlegungsmittel festgelegte Solleinspritzdruck wird.

## Revendications

1. Appareil de commande d'injection de carburant d'un moteur à combustion interne à auto-allumage par compression (1) qui est configuré pour réaliser au moins une injection principale et une injection auxiliaire à réaliser plusieurs fois avant l'injection principale, comme une opération d'injection de carburant à partir d'une vanne d'injection de carburant (23) fournie dans un système d'alimentation en carburant (2), l'appareil de commande d'injection de carburant comprenant :
un moyen de reconnaissance de variation de pression de carburant pour reconnaître une pression de carburant dans le système d'alimentation en carburant (2) qui change périodiquement avec l'achèvement de l'injection auxiliaire précédente parmi l'injection auxiliaire des plusieurs fois ; l'appareil de commande d'injection de carburant étant **caractérisé par**
un moyen de réglage de pression d'injection cible (41) pour régler une pression d'injection cible d'injection auxiliaire subséquente à réaliser après l'achèvement de l'injection auxiliaire précédente selon les opérations requises pour l'injection auxiliaire, une opération étant le cas requis au pré-mélange, dans lequel la pression d'injection cible de l'injection auxiliaire subséquente est réglée à une valeur supérieure à la pression de réglage principale, pour augmenter la proportion pré-mélangée du carburant injecté dans l'injection auxiliaire subséquente, et une autre opération étant le cas requis au préchauffage, dans lequel la pression d'injection cible de l'injection auxiliaire subséquente est fixée à une valeur inférieure à la pression de réglage principale, pour garantir le préchauffage du cylindre interne par le carburant injecté dans l'injection auxiliaire subséquente ; et
un moyen d'exécution d'injection auxiliaire subséquente pour exécuter l'injection auxiliaire subséquente à un moment où la pression de carburant dans le système d'alimentation en carburant (2) qui est reconnue par le moyen de reconnaissance de variation de pression de carburant atteint la pression d'injection cible réglée par le moyen de réglage de pression d'injection cible.

2. Appareil de commande d'injection de carburant du moteur à combustion interne (1) selon la revendication 1, dans lequel la pression d'injection cible de l'injection auxiliaire subséquente est réglée sur la base d'une valeur cible d'une distance de pénétration de pulvérisation du carburant injecté dans l'injection auxiliaire subséquente dans une chambre de combustion (3).

3. Appareil de commande d'injection de carburant du moteur à combustion interne (1) selon la revendication 1 ou 3, dans lequel, dans le cas requis au préchauffage, le moyen d'exécution de l'injection auxiliaire subséquente est configuré pour exécuter l'injection auxiliaire subséquente, après l'achèvement de l'injection auxiliaire précédente, à un moment où la pression de carburant atteint la pression d'injection cible dans une première période descendante de pression interne du système d'alimentation en carburant.

4. Appareil de commande d'injection de carburant du moteur à combustion interne (1) selon la revendication 1 ou 3, dans lequel, dans le cas requis au pré-mélange, le moyen d'exécution d'injection auxiliaire subséquente est configuré pour exécuter l'injection auxiliaire subséquente, après l'achèvement de l'injection auxiliaire précédente, au moment où la pression de carburant atteint la pression d'injection cible dans une première période ascendante de pression interne du système d'alimentation en carburant.

5. Appareil de commande d'injection de carburant du moteur à combustion interne (1) selon la revendication 1 ou 3, comprenant de plus un moyen de détermination de quantité d'injection auxiliaire précédente pour déterminer une quantité d'injection de l'injection auxiliaire précédente de manière telle que, dans le cas requis au préchauffage, une valeur de minimum de la pression de carburant dans le système d'alimentation en carburant (2) qui change périodiquement avec l'achèvement de l'injection auxiliaire précédente devient inférieure ou égale à la pression d'injection cible réglée par le moyen de réglage de pression d'injection cible.

6. Appareil de commande d'injection de carburant du moteur à combustion interne (1) selon la revendication 1 ou 3, comprenant de plus un moyen de détermination de quantité d'injection auxiliaire précédente pour déterminer une quantité d'injection de l'injection auxiliaire précédente de manière telle que, dans le cas requis au pré-mélange, une valeur de maximum de la pression de carburant dans le système d'alimentation en carburant (2) qui change périodiquement avec l'achèvement de l'injection auxiliaire précédente devient supérieure ou égale à la pression d'injection cible réglée par le moyen de réglage de pression d'injection cible.
